# EUROPEAN PATENT APPLICATION

(11) **EP 2 816 482 A1**
(43) Date of publication of application: **24.12.2014**
(21) Application number: 14169085.9
(22) Date of filing: 20.05.2014
(51) Int. Cl.: G06F 12/02

(54) **Information processing apparatus, control circuit, and control method**

(30) Priority: 17.06.2013 JP 2013127040
(71) Applicant: FUJITSU LIMITED, Kawasaki-shi, Kanagawa 211-8588 (JP)
(72) Inventor: Higeta, Masanori, Kanagawa, 211-8588 (JP); Hayasaka, Kazumi, Kanagawa, 211-8588 (JP)
(74) Representative: Hoffmann Eitle

(57) **Abstract**

An information processing apparatus includes: a storage device that includes a plurality of storage areas; a first counter that counts, among blocks each including a plurality of storage areas included in the storage device, number of transfer candidate blocks including the storage areas in which written data is invalidated; a second counter that counts, among the blocks, number of reserve blocks in which no data is written in the respective storage areas; a determination unit that determines whether transfer processing is to be started in accordance with a result of comparing a count value of the first counter with a count value of the second counter; and a transfer unit that transfers only valid data written in the respective storage areas of the transfer candidate block to the reserve block when the determination unit determines that the transfer processing is to be started.

## Description

### FIELD

The embodiments discussed herein are related to an information processing apparatus, a control circuit, and a control method.

### BACKGROUND

Information processing apparatuses have been known that use non-volatile memories operating at higher speed than magnetic disks. As an example of such information processing systems, an information processing apparatus has been known that uses a NAND flash memory device as a storage device such as a storage. In the following description, the NAND flash memory device is described as the NAND device.

The NAND device writes and reads data, and transfers data in relation to updating of data, on a physical page basis, while it erases data on a physical block basis. A physical page serves as a storage area of the data. A physical block includes a plurality of physical pages. The NAND device thus includes a physical block in which valid data and invalid data are mixed in some cases. An element of the NAND device deteriorates when data is erased. A deterioration speed of the element differs between the physical page including data that is frequently updated and the physical page including data that is not frequently updated.

A NAND controller has been known that transfers data written in each physical block in accordance with a writing condition of the data and a time when the data is written in the physical block to organize data and level the deterioration. For example, the NAND controller includes a management information table that stores therein, for each physical block, information indicating whether data of each physical page is valid and information indicating the time when data is last written.

The NAND controller refers to the management information table and determines, for each physical block, whether data is transferred on the basis of the number of pieces of valid data and an elapsed time from the writing of the data. When determining that the data is transferred, the NAND controller then transfers valid data written in the physical block to a physical page of a reserve block and erases the data of the selected physical block, thereby reserving a new reserve block and leveling the deterioration. Conventional technologies are described in Japanese Laid-open Patent Publication No. 05-198198 and Japanese Laid-open Patent Publication No. 2008-146253, for example.

The above-described technique that determines whether data is transferred on a physical block basis has a problem of taking a long time to transfer the data because all of the valid data included in one physical block is transferred to the physical pages of the reserve block.

The NAND controller thus holds accesses to the NAND device during the transfer of the data, for example, thereby reducing access performance to the NAND device.

Accordingly, it is an object in one aspect of an embodiment of the invention to provide an information processing apparatus, a control circuit, a control program, and a control method that can improve the access performance to the NAND device.

### SUMMARY

According to an aspect of an embodiment, an information processing apparatus includes: a storage device that includes a plurality of storage areas; a first counter that counts, among blocks each including a plurality of storage areas included in the storage device, number of transfer candidate blocks including the storage areas in which written data is invalidated; a second counter that counts, among the blocks, number of reserve blocks in which no data is written in the respective storage areas; a determination unit that determines whether transfer processing is to be started in which data is transferred from a transfer candidate block to a reserve block, in accordance with a result of comparing a count value of the first counter with a count value of the second counter; and a transfer unit that transfers only valid data among data written in the respective storage areas of the transfer candidate block to the reserve block when the determination unit determines that the transfer processing is to be started.

### BRIEF DESCRIPTION OF DRAWINGS

FIG. 1 is a schematic diagram explaining an information processing apparatus according to a first embodiment;
FIG. 2 is a schematic diagram explaining an example of memory access;
FIG. 3 is a schematic diagram explaining an example of processing performed by a NAND controller according to the first embodiment;
FIG. 4 is a schematic diagram explaining an example in which reserve blocks are used up;
FIG. 5 is a schematic diagram explaining an example of the processing performed by the NAND controller according to the first embodiment to determine whether cyclic reference control is started;
FIG. 6 is a schematic diagram explaining a functional structure of the NAND controller according to the first embodiment;
FIG. 7 is a schematic diagram explaining an example of an address conversion table according to the first embodiment;
FIG. 8 is a schematic diagram explaining an example of a management information table according to the first embodiment;
FIG. 9 is a schematic diagram explaining an example of the processing performed by the NAND controller according to the first embodiment;
FIG. 10 is a flowchart explaining a flow of the processing performed by the NAND controller according to the first embodiment;
FIG. 11 is a flowchart explaining a flow of the processing performed by the NAND controller according to the first embodiment to determine whether the cyclic reference control is performed;
FIG. 12 is a flowchart explaining a flow of the processing performed by the NAND controller according to the first embodiment to erase data;
FIG. 13 is a schematic diagram explaining a functional structure of a NAND controller according to a second embodiment;
FIG. 14 is a schematic diagram explaining an example of processing to reduce a frequency of issuing a write request;
FIG. 15 is a flowchart explaining a flow of processing performed by the NAND controller according to the second embodiment; and
FIG. 16 is a schematic diagram explaining an example of a NAND controller that executes a control program.

### DESCRIPTION OF EMBODIMENTS

Preferred embodiments of the present invention will be explained with reference to accompanying drawings. The disclosed technique, however, is not limited to the following embodiments. The embodiments may be performed in any combination of them without inconsistency among them.

### [a] First embodiment

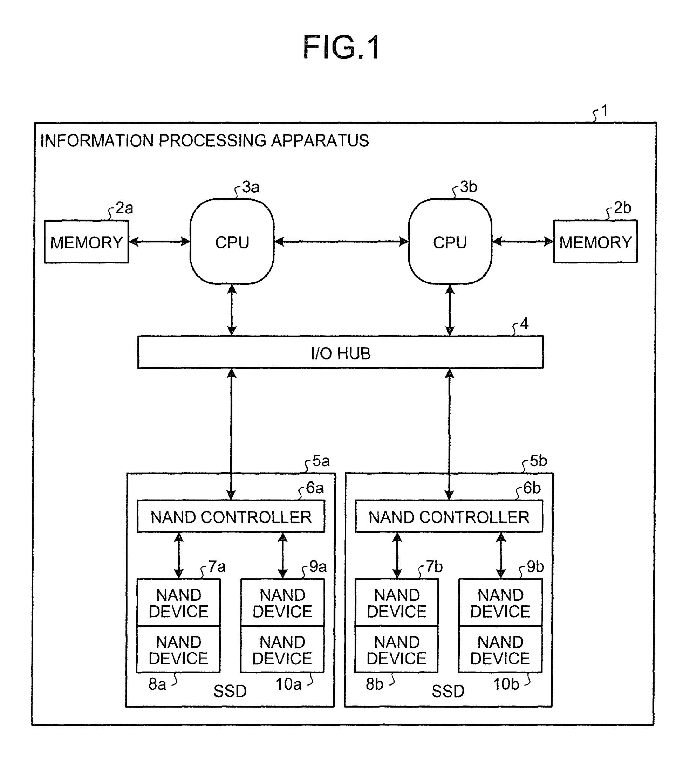

In a first embodiment, an example of the information processing apparatus according to the invention is described with reference to FIG. 1. FIG. 1 is a schematic diagram explaining an information processing apparatus according to the first embodiment. In the example illustrated in FIG. 1, an information processing apparatus 1 includes a plurality of memories 2a and 2b, a plurality of central processing units (CPUs) 3a and 3b, an input-output (I/O) hub 4, and a plurality of solid state drives (SSDs) 5a and 5b. The SSD 5a includes a NAND controller 6a and a plurality of NAND devices 7a to 10a.

The SSD 5b includes a NAND controller 6b and a plurality of NAND devices 7b to 10b. In the following description, the descriptions of the NAND controller 6b and the NAND devices 7b to 10b are omitted because they function in the same manner as the NAND controller 6a and the NAND devices 7a to 10a.

The memories 2a and 2b are storage devices that store therein data used by the CPUs 3a and 3b for arithmetic processing. The CPUs 3a and 3b are arithmetic processing devices that perform various types of arithmetic processing using the data stored in the memories 2a and 2b. The CPUs 3a and 3b acquire the data stored in the memories 2a and 2b using the non-uniform memory access (NUMA) technique and perform the arithmetic processing using the acquired data, for example.

The CPUs 3a and 3b acquire the data stored in the respective SSDs 5a and 5b through the I/O hub 4 and perform the arithmetic processing using the acquired data. Specifically, the CPU 3a issues a read request and a write request for data to the SSD 5a and reads data from and writes data in the NAND devices 7a to 10a. For example, the CPU 3a issues, to the SSD 5a, a read request that includes a logical address designating data to be read. The CPU 3a issues a write request that includes a logical address designating a writing destination in which data is written and the data to be written.

The NAND device 7a is a non-volatile memory that stores therein various types of data. Specifically, the NAND device 7a includes a plurality of physical pages that serve as storage areas of data and writes data on a physical page basis. The NAND device 7a includes a plurality of physical blocks each having the physical pages and erases data on a block basis. For example, one physical page includes a storage capacity of eight kilobytes while one physical block includes 128 physical pages. The NAND device 7a is an example of a storage device.

The NAND controller 6a accesses the NAND devices 7a to 10a to read data therefrom or write data therein. For example, the NAND controller 6a includes an address conversion table in which the logical addresses that the respective CPUs 3a and 3b use to designate the storage areas in which the data is stored and the physical addresses indicating the storage areas, in which the data is stored, of the NAND devices 7a to 10a are associated with each other.

When receiving the logical address together with the read request, the NAND controller 6a identifies the physical address associated with the logical address using the address conversion table, and reads the data from the storage area indicated by the identified physical address. The NAND controller 6a then transmits the read data to the CPU 3a through the I/O hub 4.

In the following description, the logical address corresponding to the beginning address of each physical page is described simply as the logical address while the physical address corresponding to the beginning address of each physical page is described simply as the physical address for easy understanding. A system executed by the information processing apparatus 1 issues the read request and the write request to the logical address corresponding to the beginning address of each physical page.

For example, when the NAND devices 7a to 10a include a plurality of blocks each including 2^{q} physical pages, the NAND controller 6a performs the following processing. The NAND controller 6a sets the lower q bits of a logical address as a logical page number that identifies a logical page in one logical block and the upper p bits of the rest logical address as a logical block address that indicates the one logical block.

The NAND controller 6a sets the upper p bits of a physical address as a physical block address that indicates one physical block and the lower q bits of the physical address as a physical page number that identifies the physical page in the one physical block. The NAND controller 6a divides the logical address into the logical block address indicating the logical block and the logical page number indicating the logical page in the logical block. The NAND controller 6a divides the physical address into the physical block address indicating the physical block and the physical page number indicating the physical page in the physical block.

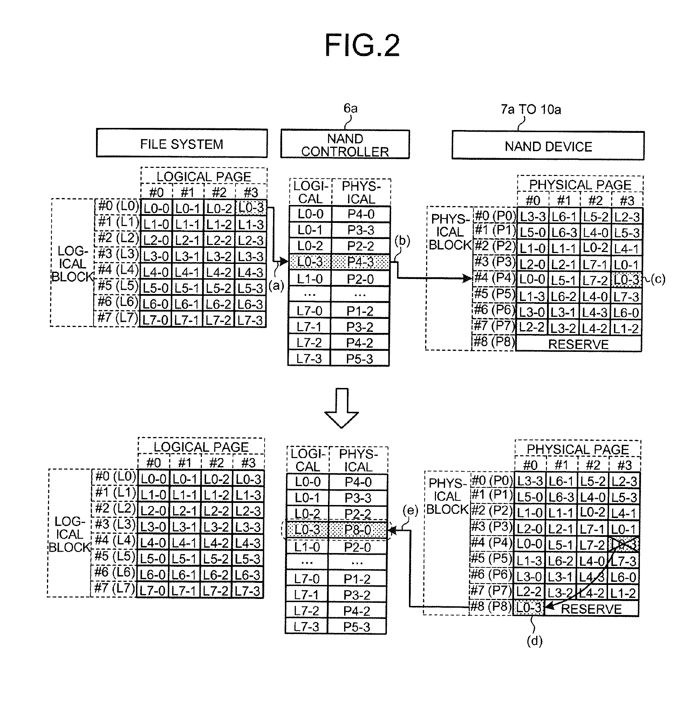

The following describes an example of memory access performed by the NAND controller 6a with reference to FIG. 2. FIG. 2 is a schematic diagram explaining an example of the memory access. In the example illustrated in FIG. 2, the number of blocks is "nine" and the number of physical pages in each block is "four" in the NAND device 7a for easy understanding. In the example illustrated in FIG. 2, processing is described in which the NAND controller 6a writes data in the NAND devices 7a to 10a on a physical page basis using the address conversion table in which the logical block addresses and the physical block addresses are associated with each other.

For example, the NAND controller 6a, from a file system executed by the CPU 3a, issues the write request to the logical page number "3" of the logical block address "L0", that is, the logical address "L0-3" as illustrated with (a) in FIG. 2. The NAND controller 6a then acquires the physical address "P4-3" associated with the logical address "L0-3" using the address conversion table, and identifies the physical page storing therein data before being updated as illustrated with (b) in FIG. 2.

Subsequently, the NAND controller 6a reads the data of the physical page indicated by the physical address "P4-3" as illustrated with (c) in FIG. 2, updates the read data to the data to be written, and stores the updated data in an empty physical page in a reserve block. As a detailed example, the NAND controller 6a stores the updated data in the physical page indicated by the physical address "P8-0" as illustrated with (d) in FIG. 2. Thereafter, the NAND controller 6a updates the physical address "P4-3" associated with the logical address "L0-3" to "P8-0" indicating the physical page of the transfer destination as illustrated with (e) in FIG. 2, and then ends the processing.

When writing and transferring are performed on the data stored in the NAND devices 7a to 10a on a physical page basis, valid data and invalid data may be mixed in one physical block. For example, in the example illustrated in FIG. 2, the NAND controller 6a invalidates the data in the physical block indicated by the physical block address "P4" when updating the data indicated by the logical address "L0-3". The NAND controller 6a then stores the updated data to the physical block indicated by the physical block address "P8". Thus, valid data and invalid data are mixed in the physical block indicated by the physical block address "P4".

The NAND devices 7a to 10a are not capable of overwriting the data on the physical page storing therein the invalid data, thereby writing the data in the reserve block in which data is preliminarily erased. An increase in the number of physical blocks in which valid data and invalid data are mixed, however, makes it difficult to reserve the reserve blocks in which new data is written. The NAND devices 7a to 10a include elements that retain data. Such elements deteriorate at every erasing of data. Further deteriorated elements have difficulty in proper retaining electric charges.

A related NAND controller performs data transfer control that organizes valid data to reserve a new reserve block and to level deterioration. The following describes garbage collection processing that reserves a new reserve block and wear leveling processing that levels deterioration of elements as examples of the data transfer control performed by the related NAND controller.

For example, the NAND controller includes an address conversion table that converts a logical address used for designating data by a system executed by the information processing apparatus into a physical address indicating the physical page in which the data is stored. The NAND controller includes a management information table that stores therein page validity indicating a storing state of data and a time stamp indicating a time when the data is stored in association with each other for each physical block. The page validity is information that indicates whether the data stored in each physical page of the associated physical block is valid. The time stamp is information that indicates a time when data is stored in the associated physical block.

For example, the NAND controller refers to each page validity in the management information table when performing garbage collection processing. The NAND controller determines whether the number of pieces of valid data is smaller than a certain number for each physical block. The NAND controller sets the physical block that is determined to include valid data the number of which is smaller than the certain number as the data transfer object, and transfers the valid data from the physical block set as the data transfer object to a reserve block.

For another example, the NAND controller refers to each time stamp in the management information table when performing wear leveling processing that levels deterioration of the elements by transferring data from writing of which a certain time has elapsed. The NAND controller compares the referred time stamp with the current time for each physical block, and determines whether a certain time has elapsed from the writing of the data. The NAND controller sets the physical block that is determined to include data from writing of which the certain time has elapsed as the data transfer object, and transfers the valid data from the physical block set as the data transfer object to a reserve block.

After the NAND controller transfers the valid data stored in the physical block determined as the data transfer object to the reserve block, it erases data of the physical block serving as the transfer source, and sets the physical block data of which is erased as a new reserve block. When data is transferred on a physical block basis, the NAND controller requires time to transfer the data, thereby reducing the access performance to the NAND devices 7a to 10a.

When performing the data transfer control such as the garbage collection processing and the wear leveling processing, the NAND controller updates the address conversion table in accordance with the transfer of data. The NAND controller determines whether data is transferred using the management information table that manages the page validity and the time stamp for each physical block. Thus, the NAND controller can identify the transfer source physical address of the transferred data but is unable to identify the logical address of the data, after performing the data transfer control.

The NAND controller acquires the physical address from the address conversion table using the logical address as an index when the NAND controller is structured by hardware such as an integrated circuit. However, it is difficult to structure the NAND controller such that the logical address is identified from the address conversion table using the physical address as an index and the physical address associated with the identified logical address is updated.

Thus, the NAND controller includes a unit that inverse-converts the data transfer source physical address into the corresponding logical address. For example, the NAND controller includes an address inverse-conversion table that inverse-converts the physical address into the logical address using the physical address as an index. The NAND controller identifies the logical address corresponding to the data transfer source physical address using the address inverse-conversion table. The NAND controller updates the physical address associated with the identified logical address to the transfer destination physical address among the physical addresses stored in the address conversion table.

The circuit scale of the NAND controller, however, increases when the NAND controller includes the unit that inverse-converts the data transfer source physical address into the corresponding logical address such as the address inverse-conversion table. The NAND controller refers to the address conversion table and the address inverse-conversion table and updates the address conversion table at every data transfer control, thereby increasing processing time relating to the transfer of data. As a result, the system performance is lowered.

The NAND controller 6a according to the first embodiment performs the following processing. The NAND controller 6a selects one logical address using any technique. The NAND controller 6a then acquires the physical address associated with the selected logical address from an address conversion table. The NAND controller 6a then determines whether data is transferred from the physical block including the physical page indicated by the acquired physical address using a management information table. When the data is transferred, the NAND controller 6a updates the physical address associated with the selected logical address to the transfer destination physical address among the physical addresses stored in the address conversion table after the transfer.

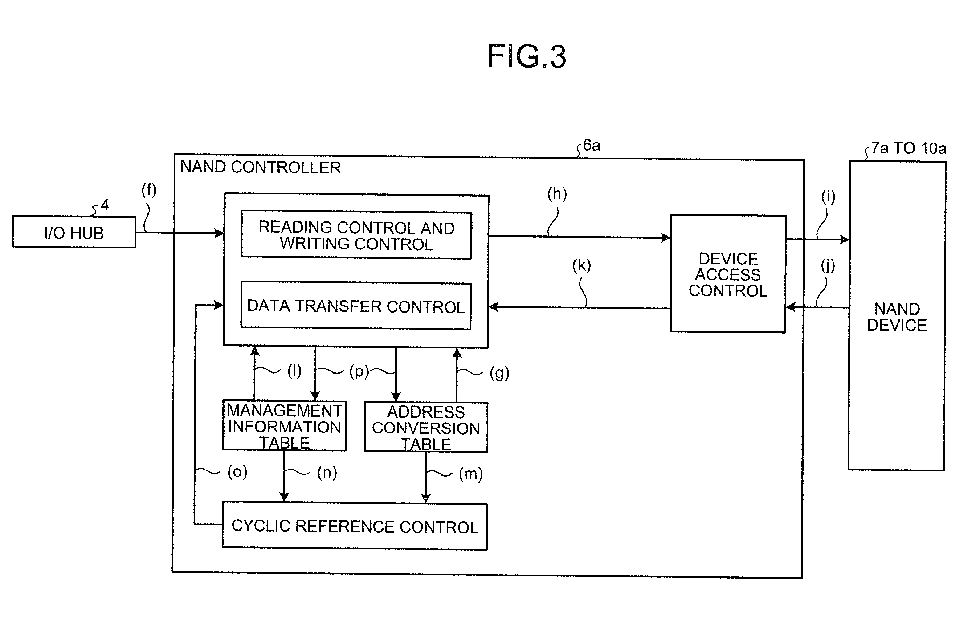

The following describes various types of processing performed by the NAND controller 6a with reference to FIG. 3. FIG. 3 is a schematic diagram explaining an example of the processing performed by the NAND controller according to the first embodiment. The following describes reading control that reads data and writing control that writes data, and cyclic reference control that determines whether data is transferred in accordance with an elapsed time from the writing of the data or the number of pieces of valid data included in the physical block.

In the following description, the NAND controller 6a includes an address conversion table in which a logical address indicating data and the physical address indicating the physical page storing therein the data are associated with each other. The NAND controller 6a includes a management information table that stores therein a storing state of data and a time when the data is stored in association with each other for each physical block.

The following describes the reading control and the writing control that are performed by the NAND controller 6a. For example, the NAND controller 6a receives a read request from the I/O hub 4 as illustrated with (f) in FIG. 3. The NAND controller 6a performs the reading control. For example, the NAND controller 6a converts the logical address into the physical address using the address conversion table as illustrated with (g) in FIG. 3.

The NAND controller 6a performs device access control using the physical address after the conversion as illustrated with (h) in FIG. 3. Specifically, the NAND controller 6a reads data from the storage area indicated by the physical address after the conversion as illustrated with (i) in FIG. 3. As a result, the NAND controller 6a acquires the data to be read as illustrated with (j) in FIG. 3. The NAND controller 6a outputs the acquired data to the CPU that has sent the read request as illustrated with (k) in FIG. 3 after the acquisition of the read data.

When receiving a write request relating to updating of data, the NAND controller 6a converts the logical address into the physical address using the address conversion table and acquires a transfer source physical address at which data before being updated is stored as illustrated with (g) in FIG. 3. The NAND controller 6a looks up the management information table and acquires a physical address of the reserve block storing therein no data as a transfer destination physical address as illustrated with (1) in FIG. 3.

The NAND controller 6a performs the device access control such that the NAND controller 6a reads data from the physical page indicated by the transfer source physical address, updates the data, and thereafter stores the data in the physical page indicated by the transfer destination physical address as illustrated with (h) and (i) in FIG. 3. As a result, the NAND controller 6a acquires a reply to the write request of the data as illustrated with (j) and (k) in FIG. 3. The NAND controller 6a then updates the address conversion table and the management information table in accordance with the transfer of the data as illustrated with (p) in FIG. 3.

The following describes an example of the cyclic reference control performed by the NAND controller 6a. For example, the NAND controller 6a refers to the address conversion table and selects a logical address as illustrated with (m) in FIG. 3. The NAND controller 6a acquires the physical address associated with the selected logical address from the address conversion table and identifies the physical block address from the upper bits of the acquired physical address. The NAND controller 6a refers to the management information table and determines whether data of the physical block is transferred on the basis of the page validity and the time stamp that are associated with the identified physical block address as illustrated with (n) in FIG. 3.

When determining that the data of the physical block is transferred, the NAND controller 6a performs the data transfer control as illustrated with (o) in FIG. 3. Specifically, the NAND controller 6a sets the identified physical address as the transfer source address. The NAND controller 6a identifies, as the transfer destination address, the physical address of a reserve page in which no data is written among physical pages included in a reserve block using the management information table. The NAND controller 6a then performs the device access control such that the data is transferred from the physical page indicated by the transfer source physical address to the physical page indicated by the transfer destination physical address.

The NAND controller 6a then updates the address conversion table and the management information table in accordance with the transfer of the data as illustrated with (p) in FIG. 3. The NAND controller 6a has already selected the logical address of the data to be transferred. The NAND controller 6a thus identifies the physical address associated with the selected logical address from the address conversion table and updates the identified physical address to the transfer destination physical address. Thereafter, the NAND controller 6a selects the logical address having the next address number from the address conversion table and performs the same processing on the selected logical address.

In this way, the NAND controller 6a determines whether data is transferred using a logical address as the source, and transfers the data indicated by the logical address to a reserve block when determining that the data is transferred. As a result, the NAND controller 6a can readily update the address conversion table without having a unit that inverse-converts a physical address into a logical address.

When determining that data is transferred in the order of the logical addresses, the NAND controller 6a may fail to appropriately transfer the data. For example, when performing the data transfer control in the order of the logical addresses, the NAND controller 6a does not transfer the data in the order of the physical addresses but transfers the data stored in the respective physical pages seemingly in random order.

For example, the NAND controller 6a does not sequentially transfer data of the physical block serving as the data transfer object but transfers data written in the NAND devices 7a to 10a seemingly in random order. As a result, the NAND controller 6a uses up reserve blocks before transferring the data stored in the physical block serving as the data transfer object to a reserve block in some cases.

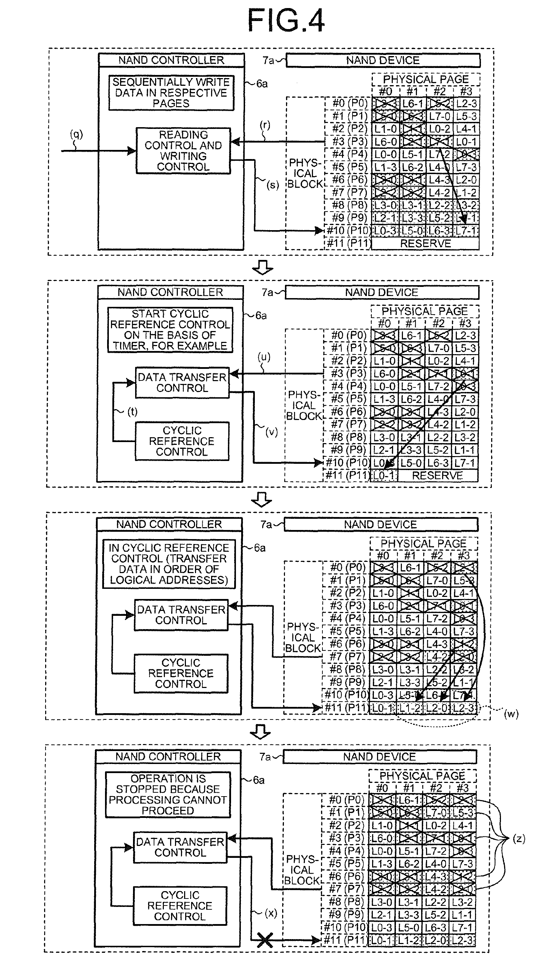

The following describes an example in which reserve blocks are used up with reference to FIG. 4. FIG. 4 is a schematic diagram explaining an example in which reserve blocks are used up. In the example illustrated in FIG. 4, the number of blocks is "12" and the number of physical pages in each block is "4" in the NAND device 7a for easy understanding. In the example illustrated in FIG. 4, the physical pages indicated by the physical addresses "P10-3" and "P11-0" to "P11-3" are reserve pages. The following describes an example in which valid data is transferred from a physical block including more than one piece of invalid data.

For example, when receiving a write request relating to updating data as illustrated with (q) in FIG. 4, the NAND controller 6a reads the data before being updated and updates the read data as illustrated with (r) in FIG. 4. The NAND controller 6a then stores the updated data in a physical page of a reserve block in which no data is written in the order of the physical page numbers among the physical pages included in the reserve blocks as illustrated with (s) in FIG. 4.

In the example illustrated in FIG. 4, the NAND controller 6a reads the data indicated by the logical address "L7-1" from the physical address "P3-2", for example. When the physical address "P10-3" indicates the beginning reserve page, the NAND controller 6a writes the updated data in the physical page indicated by the physical address "P10-3". Thereafter, the NAND controller 6a makes the data stored in the physical address "P3-2" invalid.

When starting the cyclic reference control, the NAND controller 6a selects the logical address "L0-1". In the example illustrated in FIG. 4, the data indicated by the logical address "L0-1" is stored in the physical block "#3" including two pieces of invalid data. The NAND controller 6a thus transfers the data indicated by the logical address "L0-1" as illustrated with (t) in FIG. 4. Specifically, the NAND controller 6a reads the data indicated by the logical address "L0-1" from the physical page indicated by the physical address "P3-3" as illustrated with (u) in FIG. 4. The NAND controller 6a then transfers the read data to the reserve page indicated by the physical address "P11-0" as illustrated with (v) in FIG. 4.

In the example illustrated in FIG. 4, the NAND controller 6a can erase the data of the physical block "#3" after transferring the data indicated by the logical address "L6-0" to a reserve page from the physical page indicated by the physical address "P3-0", and reserve the physical block "#3" as a new reserve block. The NAND controller 6a, however, determines whether data is transferred in the order of the logical addresses and transfers, to a reserve page, the data which the NAND controller 6a determines to transfer. The NAND controller 6a, thus, transfers, to reserve pages, the data indicated by the logical addresses "L1-2", "L2-0", and "L2-3" prior to the data indicated by the logical address "L6-0", resulting in the reserve blocks being used up.

As a result, the NAND controller 6a is not able to transfer data as illustrated with (x) in FIG. 4, for example. The NAND controller 6a is not able to erase the data in the physical blocks as illustrated with (z) in FIG. 4 and thus is not able to produce a new reserve block, thereby not capable of transferring data. In order to prevent the occurrence of such a problem, a number of reserve blocks may be reserved constantly, for example. The constant reserve of a number of reserve blocks, however, reduces the storage capacity of the NAND device 7a, thereby lowering resource usage efficiency.

To address such a problem, the NAND controller 6a performs the following processing. The NAND controller 6a counts the number of transfer candidate blocks, which are the physical blocks including the physical pages in which the written data is invalidated. The NAND controller 6a counts the number of reserve blocks. The NAND controller 6a constantly compares the number of transfer candidate blocks with the number of reserve blocks, and determines whether the cyclic reference control is started in accordance with the comparison result. When determining that the cyclic reference control is started, the NAND controller 6a performs the cyclic reference control described with reference to FIG. 3.

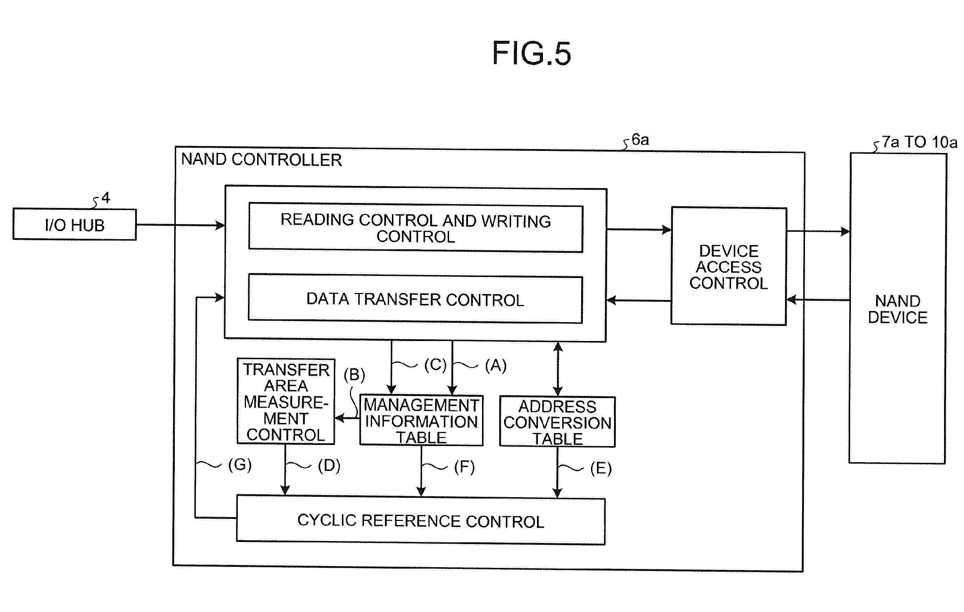

The following describes an example of the processing performed by the NAND controller 6a to determine whether the cyclic reference control is started in accordance with the number of transfer candidate blocks and the number of reserve blocks. FIG. 5 is a schematic diagram explaining an example of the processing performed by the NAND controller according to the first embodiment to determine whether the cyclic reference control is started. The reading control, the writing control, and the data transfer control among the processing performed by the NAND controller 6a are the same as those illustrated in FIG. 3, and the description thereof is thus omitted.

For example, when updating data after performing the reading control and the writing control, the NAND controller 6a updates the management information table as illustrated with (A) in FIG. 5. The NAND controller 6a then performs the following transfer area measurement control as illustrated with (B) in FIG. 5.

The NAND controller 6a determines whether the physical block serving as a data transfer source becomes a new transfer candidate block as a result of data transfer in the updating of the data. When the physical block serving as the data transfer source becomes a new transfer candidate block, the NAND controller 6a adds one to the count value of the number of transfer candidate blocks. The NAND controller 6a determines whether the reserve page serving as a data transfer destination is the beginning page in a reserve block. In other words, the NAND controller 6a determines whether the data transfer destination is the reserve page that is included in a new reserve block. When the reserve page serving as the data transfer destination is the beginning page of the reserve block, the NAND controller 6a subtracts one from the count value of the number of reserve blocks.

For example, when transferring data by the data transfer control, the NAND controller 6a updates the management information table as illustrated with (C) in FIG. 5. The NAND controller 6a then performs the following transfer area measurement control as illustrated with (B) in FIG. 5.

The NAND controller 6a determines whether the physical block serving as the data transfer source becomes a new reserve block as a result of the data transfer. When the physical block serving as the data transfer source becomes a new reserve block, the NAND controller 6a subtracts one from the count value of the number of transfer candidate blocks and adds one to the count value of the number of reserve blocks.

The NAND controller 6a compares the number of transfer candidate blocks with the number of reserve blocks that are measured by the transfer area measurement control. When the measured number of transfer candidate blocks and the measured number of reserve blocks are equal to each other, the NAND controller 6a starts the cyclic reference control for garbage collection as illustrated with (D) in FIG. 5.

For example, the NAND controller 6a selects a logical address from the address conversion table and acquires the physical address associated with the selected logical address from the address conversion table as illustrated with (E) in FIG. 5. The NAND controller 6a refers to the management information table and determines whether data is transferred on the basis of the page validity associated with the physical block address of the acquired physical address as illustrated with (F) in FIG. 5. When determining that the data is transferred, the NAND controller 6a performs the data transfer control as illustrated with (G) in FIG. 5.

The NAND controller 6a counts the number of transfer candidate blocks and the number of reserve blocks, and determines whether the cyclic reference control for garbage collection is started in accordance with the comparison result of the count values. The NAND controller 6a thus can perform the data transfer control without using up reserve blocks.

For example, a data transfer candidate block stores therein valid data and invalid data. No data is written in the physical pages of a reserve block. Thus, when the number of transfer candidate blocks is equal to or smaller than the number of reserve blocks, the garbage collection is reliably completed. The NAND controller 6a thus can perform the data transfer control without using up reserve blocks by starting the cyclic reference control at a timing when the number of transfer candidate blocks and the number of reserve blocks are equal to each other, for example.

The NAND controller 6a starts the cyclic reference control at a timing when the data transfer control is needed. As a result, the NAND controller 6a can reduce the time of implementing the data transfer control to a minimum, thereby making it possible to improve the access performance to the NAND devices 7a to 10a.

The NAND controller 6a does not need to start the cyclic reference control at a timing when the number of transfer candidate blocks and the number of reserve blocks are equal to each other. For example, the NAND controller 6a may start transfer of data in advance by starting the cyclic reference control when a value obtained by subtracting the number of transfer candidate blocks from the number of reserve blocks is equal to or smaller than a certain threshold.

The NAND controller 6a may determine whether a physical block in which data is invalidated satisfies the same condition as that to determine whether data is transferred in the cyclic reference control for garbage collection, and may add one to the number of transfer candidate blocks when determining that the physical block having invalid data satisfies the condition. In other words, the NAND controller 6a may count only the number of blocks from which data is actually transferred.

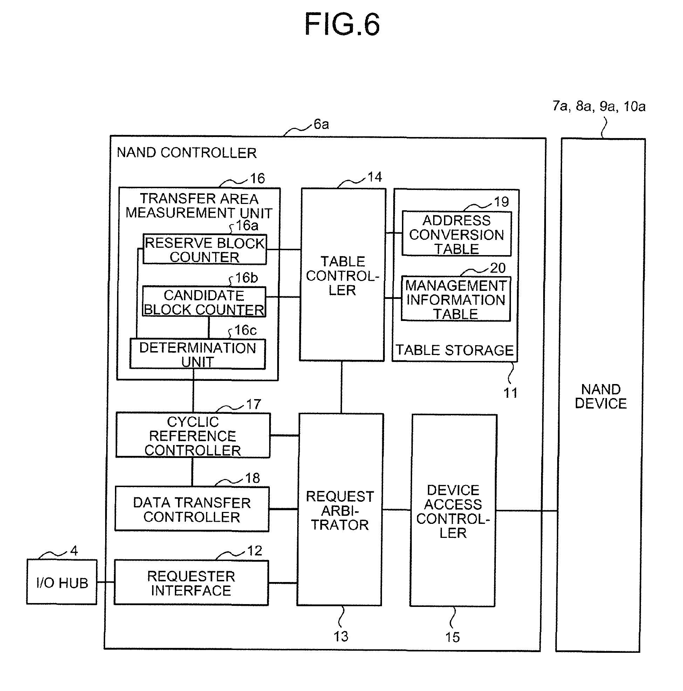

The following describes an example of a functional structure of the NAND controller 6a with reference to FIG. 6. FIG. 6 is a schematic diagram explaining the functional structure of the NAND controller according to the first embodiment. In the example illustrated in FIG. 6, the NAND controller 6a includes a table storage 11, a requester interface 12, a request arbitrator 13, and a table controller 14. The NAND controller 6a further includes a device access controller 15, a transfer area measurement unit 16, a cyclic reference controller 17, and a data transfer controller 18.

The transfer area measurement unit 16 includes a reserve block counter 16a, a candidate block counter 16b, and a determination unit 16c. The table storage 11 includes an address conversion table 19 and a management information table 20.

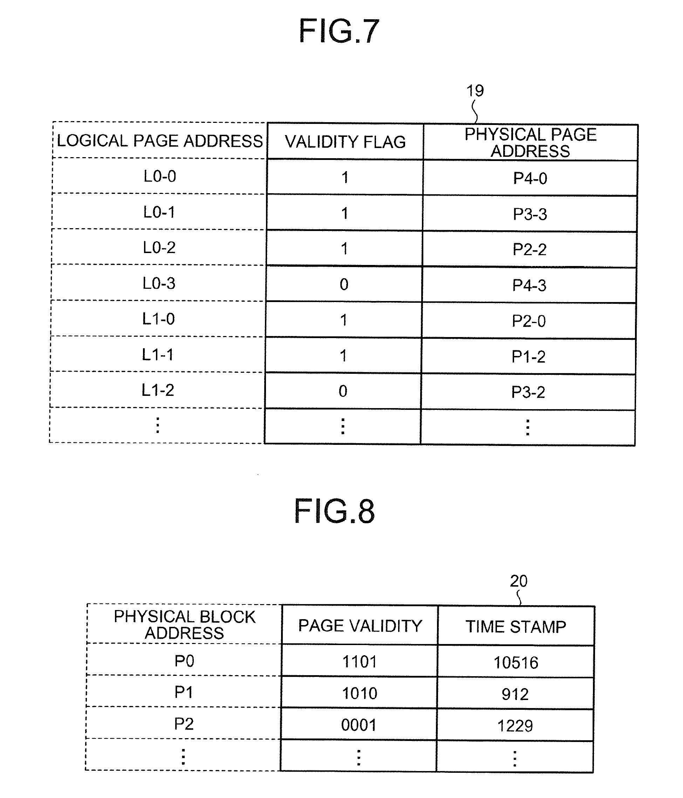

The following describes the address conversion table 19 stored in the table storage 11 and information stored in the management information table 20 with reference to FIGS. 7 and 8. FIG. 7 is a schematic diagram explaining an example of the address conversion table according to the first embodiment.

As illustrated in FIG. 7, the address conversion table 19 includes entries for the respective logical addresses. Each of the entries stores therein a validity flag and the physical address at which the data indicated by the logical address is stored, the validity flag and the physical address being in association with each other. The validity flag is a validity bit that indicates whether the data stored in the physical page indicated by the associated physical address is valid data.

For example, in the example of the address conversion table 19 illustrated in FIG. 7, the entry associated with the logical address "L0-0" stores therein the validity flag "1" and the physical address "P4-0" in association with each other. The address conversion table 19 indicates that valid data designated by the logical address "L0-0" is stored in the page indicated by the physical address "P4-0".

Likewise, in the example of the address conversion table 19 illustrated in FIG. 7, the entry associated with the logical address "L0-1" stores therein the validity flag "1" and the physical address "P3-3" in association with each other. In the address conversion table 19, the entry associated with the logical address "L0-2" stores therein the validity flag "1" and the physical address "P2-2" in association with each other. In the address conversion table 19, the entry associated with the logical address "L1-0" stores therein the validity flag "1" and the physical address "P2-0" in association with each other. In the address conversion table 19, the entry associated with the logical address "L1-1" stores therein the validity flag "1" and the physical address "P1-2" in association with each other.

In the address conversion table 19, the entry associated with the logical address "L0-3" stores therein the validity flag "0" and the physical address "P4-3" in association with each other. In the address conversion table 19, the entry associated with the logical address "L1-2" stores therein the validity flag "0" and the physical address "P3-2" in association with each other. The address conversion table 19 indicates that the data stored in the physical addresses "P4-3" and "P3-2" are not valid data.

The following describes the information stored in the management information table 20 with reference to FIG. 8.

FIG. 8 is a schematic diagram explaining an example of the management information table according to the first embodiment. As illustrated in FIG. 8, in the management information table 20, an entry associated with a physical block address stores therein page validity and a time stamp in association with each other.

The page validity is a bit string that indicates whether the data stored in the respective physical pages of the physical block indicated by the associated physical block address is valid data. For example, when one physical block includes n physical pages, the management information table 20 uses a bit string of n bits as the page validity. The management information table 20 associates the physical pages included in the physical block with the respective bits of the page validity, and sets the bit associated with the physical page storing therein valid data as "1". The management information table 20 sets the bit associated with the physical page storing therein no valid data as "0". In the example illustrated in FIG. 8, one physical block includes four physical pages.

The time stamp is information that indicates a time when data is last written in the physical block indicated by the associated physical block address, and is a count value that a timer (not illustrated) counts at the time the data is written, for example. For example, in the example of the management information table 20 illustrated in FIG. 8, the entry associated with the physical block address "P0" stores therein the page validity "1101" and the time stamp "10516" in association with each other. The management information table 20 indicates that data stored in the physical pages having page numbers "0", "1", and "3" is valid data among the physical pages included in the physical block indicated by the physical block address "P0". The management information table 20 indicates that data is written in the physical block indicated by the physical block address "P0" at the time when a count value of the timer is "10516".

Likewise, in the example of the management information table 20 illustrated in FIG. 8, the entry associated with the physical block address "P1" stores therein the page validity "1010" and the time stamp "912" in association with each other. In the management information table 20, the entry associated with the physical block address "P2" stores therein the page validity "0001" and the time stamp "1229" in association with each other. The management information table 20 stores therein other physical block addresses, page validity, and time stamps in association with each other besides those illustrated in FIG. 8.

Referring back to FIG. 6, the requester interface 12 is an interface for a request sent from the CPUs 3a and 3b to the NAND devices 7a to 10a. For example, the requester interface 12 receives a read request including a logical address from the CPUs 3a and 3b through the I/O hub 4. In this case, the requester interface 12 outputs the read request to the request arbitrator 13. When receiving data read from the NAND devices 7a to 10a from the request arbitrator 13, the requester interface 12 transmits the data to the CPUs 3a and 3b that have issued the read request.

The requester interface 12 receives, from the CPUs 3a and 3b, a write request including data to be written in the NAND devices 7a to 10a and the logical address of the data to be written. In this case, the requester interface 12 issues the received write request to the request arbitrator 13. When receiving a reply from the request arbitrator 13 indicating the completion of the data writing, the requester interface 12 transmits the received reply to the CPUs 3a and 3b that have issued the write request. The requester interface 12 is an example of a writing unit.

The request arbitrator 13 arbitrates various requests issued by the requester interface 12, the data transfer controller 18, and the cyclic reference controller 17. Specifically, the request arbitrator 13 receives a read request or a write request from the requester interface 12. The request arbitrator 13 receives, from the data transfer controller 18, a transfer request that requests to transfer data stored in the NAND devices 7a to 10a from the block currently storing therein the data to another block. The request arbitrator 13 receives, from the data transfer controller 18, an erasing request that requests to erase data in the physical block. The request arbitrator 13 receives, from the cyclic reference controller 17, a table reference request that requests to refer to the address conversion table 19 or the management information table 20.

The request arbitrator 13 arbitrates the read request or the write request received from the requester interface 12, the transfer request or the erasing request received from the data transfer controller 18, and the table reference request received from the cyclic reference controller 17. For example, the request arbitrator 13 performs a read request and a write request issued by the requester interface 12 first, so that the CPUs 3a and 3b will not be hindered from reading and writing data to and from the NAND devices 7a to 10a. For example, the request arbitrator 13 performs a transfer request prior to an erasing request and a table reference request and performs an erasing request prior to a table reference request.

A rule for the request arbitrator 13 to arbitrate the respective requests is not limited to the processing described above. Any rule is applicable. For example, the request arbitrator 13 may calculate a free capacity of the NAND devices 7a to 10a using the information stored in the management information table 20 and perform an erasing request prior to the other requests when the calculated free capacity is smaller than a certain threshold.

The following describes an example of processing performed by the request arbitrator 13 when receiving a read request, a write request, a transfer request, an erasing request, and a table reference request. For example, when receiving the read request, the request arbitrator 13 outputs the logical address included in the read request to the table controller 14. When receiving the physical address from which data is read from the table controller 14, the request arbitrator 13 issues the read request including the received physical address to the device access controller 15. When receiving the data to be read from the device access controller 15 after the issue of the read request, the request arbitrator 13 outputs the received data to the requester interface 12.

When receiving a write request, the request arbitrator 13 outputs the logical address included in the write request to the table controller 14. As a result, when the data to be written is new data, the request arbitrator 13 receives, from the table controller 14, the physical address of the page in which the data is written in a reserve block storing therein no data.

The request arbitrator 13 then issues the write request including the physical address received from the table controller 14 and the data to be written to the device access controller 15. When receiving a reply from the device access controller 15 indicating the completion of the data writing, the request arbitrator 13 outputs, to the table controller 14, a table updating request that includes the physical address of the page serving as the writing destination of the data and the logical address included in the write request. When receiving a reply from the table controller 14 indicating the completion of the table update, the request arbitrator 13 outputs a reply to the write request to the requester interface 12.

When the writing intends to update data, the request arbitrator 13 receives, from the table controller 14, the physical address of the page storing therein the data to be updated as an updating source physical address. The request arbitrator 13 receives, from the table controller 14, the physical address of the page included in the reserve block, that is, the physical address of the page serving as the writing destination of the data, as an updating destination physical address.

When receiving the updating source physical address and the updating destination physical address from the table controller 14, the request arbitrator 13 issues an updating request that requests to update the data to the device access controller 15. Specifically, the request arbitrator 13 issues, to the device access controller 15, the updating request that includes the updating source physical address, the updating destination physical address, and the data to be written.

When receiving a reply from the device access controller 15 indicating the completion of the data writing, the request arbitrator 13 performs the following processing. The request arbitrator 13 outputs, to the table controller 14, the table updating request that includes the updating source physical address, the updating destination physical address, and the logical address included in the write request. When receiving a reply to the table updating request from the table controller 14 after the output of the table updating request, the request arbitrator 13 outputs, to the requester interface 12, a reply indicating the completion of the data writing.

The request arbitrator 13 receives the transfer request that includes the transfer source physical address that is the physical address of the physical page storing therein the data to be transferred and the logical address to designate the data to be transferred. The request arbitrator 13 acquires the physical address of the physical page serving as the transfer destination of the data as the transfer destination physical address by sending an inquiry to the table controller 14, for example.

The request arbitrator 13 issues the transfer request that includes the transfer source physical address and the transfer destination physical address to the device access controller 15. When receiving a reply from the device access controller 15 indicating the completion of the data transfer, the request arbitrator 13 performs the following processing. The request arbitrator 13 outputs, to the table controller 14, the table updating request including the logical address that is received from the data transfer controller 18 and designates the data to be transferred, the transfer destination physical address, and the transfer source physical address. When receiving a reply to the table updating request from the table controller 14, the request arbitrator 13 outputs a reply to the data transfer controller 18 indicating the completion of the data transfer.

The request arbitrator 13 receives the erasing request that includes the physical block address indicating the physical block data of which is erased. When receiving the erasing request, the request arbitrator 13 issues the received erasing request to the device access controller 15. When receiving a reply from the device access controller 15 indicating the completion of the data erasure, the request arbitrator 13 outputs, to the table controller 14, a table updating request including the physical block address included in the erasing request. When receiving a reply from the table controller 14 indicating the completion of the data updating, the request arbitrator 13 outputs a reply to the data transfer controller 18 indicating the completion of the data erasure.

When receiving the table reference request, the request arbitrator 13 outputs, to the table controller 14, the reference request for the address conversion table 19 and the management information table 20. When receiving the address conversion table 19 and the management information table 20 from the table controller 14, the request arbitrator 13 outputs the received address conversion table 19 and management information table 20 to the cyclic reference controller 17.

The table controller 14 acquires the physical address associated with the logical address. The table controller 14 updates the address conversion table 19 and the management information table 20. The table controller 14 performs the following processing when updating the management information table 20.

When the number of reserve blocks is increased as a result of erasing of data, the table controller 14 increments by one the value counted by the reserve block counter 16a. When the number of reserve blocks is decreased as a result of writing of data or updating of data, the table controller 14 decrements by one the value counted by the reserve block counter 16a. When the number of transfer candidate blocks is increased as a result of updating of data, the table controller 14 increments by one the value counted by the candidate block counter 16b. When the number of transfer candidate blocks is decreased as a result of erasing of data, the table controller 14 decrements by one the value counted by the candidate block counter 16b.

The following describes processing performed by the table controller 14 in detail. For example, when receiving the logical address included in the read request from the request arbitrator 13, the table controller 14 refers to the address conversion table 19 and acquires the physical address associated with the received logical address. The table controller 14 then outputs the acquired physical address to the request arbitrator 13.

When receiving the logical address included in the write request from the request arbitrator 13, the table controller 14 refers to the address conversion table 19 and determines whether the validity flag "1" is associated with the received logical address. When the validity flag "0" is associated with the received logical address, that is, the data to be written is new data, the table controller 14 performs the following processing.

The table controller 14 refers to the management information table 20, first, and identifies a physical block storing therein no data, that is, a reserve block. For example, the table controller 14 refers to the management information table 20, searches for the physical block associated with the page validity having all zero bits, and sets the detected physical block as the reserve block. The table controller 14 then outputs the physical address of the physical page included in the reserve block to the request arbitrator 13.

Once the table controller 14 identifies a reserve block, it outputs the physical address of a physical page included in the identified reserve block until data is written in all of the physical pages included in the reserve block. Specifically, the table controller 14 outputs the physical address of the physical page in which no data is written out of the physical pages included in the reserve block in the order of the physical page numbers. When data is written in all of the physical pages included in the reserve block, the table controller 14 refers to the management information table 20 to identify a new reserve block.

When the validity flag "1" is associated with the received logical address, that is, the writing intends to update data, the table controller 14 performs the following processing. The table controller 14 outputs the physical address associated with the received logical address to the request arbitrator 13 as the updating source physical address. The table controller 14 identifies a reserve block and outputs the physical address of the physical page storing therein no data out of the physical pages included in the identified reserve block to the request arbitrator 13 as the updating destination physical address.

When receiving the transfer request from the request arbitrator 13, the table controller 14 receives an inquiry about the transfer destination physical address from the request arbitrator 13. In this case, the table controller 14 identifies a reserve block and outputs the physical address of the physical page storing therein no data out of the physical pages included in the identified reserve block to the request arbitrator 13 as the transfer destination physical address.

The table controller 14 updates the address conversion table 19 and the management information table 20 in accordance with the writing, transfer, and erasing of data, and updates the values counted by the reserve block counter 16a and the candidate block counter 16b in accordance with the updated content. For example, when the request arbitrator 13 writes new data, the table controller 14 receives a table updating request that includes the physical address of the physical page serving as the writing destination of the data and the logical address included in the write request.

In this case, the table controller 14 extracts the physical address of the physical page serving as the writing destination of the data and the logical address from the table updating request. The table controller 14 then refers to the address conversion table 19 and updates the validity flag associated with the extracted logical address to "1". The table controller 14 also stores the extracted physical address in the address conversion table 19 in association with the extracted logical address.

The table controller 14 extracts, from the management information table 20, the entry associated with the physical block address that is the upper bits of the extracted physical address. The table controller 14 updates a bit to "1", the bit corresponding to the physical page number that is the lower bits of the extracted physical address, in the page validity of the extracted entry. The table controller 14 acquires a value of the timer and stores the acquired value in the extracted entry as the time stamp.

The table controller 14 determines whether the bit updated to "1" is the beginning bit. In other words, the table controller 14 determines whether the data writing destination is the physical page that is the beginning of a new reserve block. When determining that the bit updated to "1" is the beginning bit, the table controller 14 decrements by one the value counted by the reserve block counter 16a. The table controller 14 then outputs a reply to the table updating request to the request arbitrator 13.

When the request arbitrator 13 updates data, the table controller 14 receives a table updating request that includes the updating source physical address, the updating destination physical address, and the logical address included in the write request. In this case, the table controller 14 extracts the updating source physical address, the updating destination physical address, and the logical address from the table updating request. The table controller 14 then refers to the address conversion table 19 and updates the physical address associated with the extracted logical address to the extracted updating destination physical address.

The table controller 14 extracts, from the management information table 20, the entry associated with the physical block address that is the upper bits of the updating source physical address. The table controller 14 updates a bit to "0", the bit corresponding to the physical page number that is the lower bits of the extracted updating source physical address, in the page validity of the extracted entry.

The table controller 14 performs the following processing when updating a bit to "0", the bit corresponding to the physical page number that is the lower bits of the extracted updating source physical address, in the page validity of the extracted entry. In other words, the table controller 14 determines whether the number of bits having a value of "0" is larger than a certain threshold in the page validity of the extracted entry. When the number of bits having a value of "0" is larger than the certain threshold in the page validity of the extracted entry, the table controller 14 increments by one the value of the candidate block counter 16b.

The table controller 14 then extracts, from the management information table 20, the entry associated with the physical block address that is the upper bits of the updating destination physical address. The table controller 14 updates a bit to "1", the bit corresponding to the physical page number that is the lower bits of the extracted updating destination physical address, in the page validity of the extracted entry. The table controller 14 acquires a value of the timer and stores the acquired value in the extracted entry as the time stamp.

The table controller 14 determines whether the bit updated to "1" is the beginning bit. When determining that the bit updated to "1" is the beginning bit, the table controller 14 decrements by one the value counted by the reserve block counter 16a. The table controller 14 then outputs a reply to the table updating request to the request arbitrator 13.

When the request arbitrator 13 transfers data, the table controller 14 receives a table updating request that includes the transfer source physical address, the transfer destination physical address, and the logical address designating the data to be transferred. In this case, the table controller 14 extracts the transfer source physical address, the transfer destination physical address, and the logical address from the table updating request. The table controller 14 then refers to the address conversion table 19 and updates the physical address associated with the extracted logical address to the extracted transfer destination physical address.

The table controller 14 extracts, from the management information table 20, the entry associated with the physical block address that is the upper bits of the transfer source physical address. The table controller 14 updates a bit to "0", the bit corresponding to the physical page number that is the lower bits of the extracted transfer source physical address, in the page validity of the extracted entry.

The table controller 14 then extracts, from the management information table 20, the entry associated with the physical block address that is the upper bits of the transfer destination physical address. The table controller 14 updates a bit to "1", the bit corresponding to the physical page number that is the lower bits of the extracted transfer destination physical address, in the page validity of the extracted entry. The table controller 14 acquires a value of the timer and stores the acquired value in the extracted entry as the time stamp. The table controller 14 determines whether the bit updated to "1" is the beginning bit. When determining that the bit updated to "1" is the beginning bit, the table controller 14 decrements by one the value counted by the reserve block counter 16a. The table controller 14 then outputs a reply to the table updating request to the request arbitrator 13.

When the request arbitrator 13 erases data, the table controller 14 receives, from the request arbitrator 13, a table updating request including the physical block address included in the erasing request. In this case, the table controller 14 extracts the physical block address from the table updating request. The table controller 14 refers to the management information table 20 and updates information such as the number of times of erasing performed on the block (not illustrated) in the entry associated with the extracted physical block address.

When updating the management information table 20 in accordance with erasing of data, the table controller 14 increments by one the value counted by the reserve block counter 16a and decrements by one the value counted by the candidate block counter 16b. The table controller 14 then outputs a reply to the table updating request to the request arbitrator 13.

When receiving a table reference request, the table controller 14 acquires the address conversion table 19 and the management information table 20 from the table storage 11. The table controller 14 then outputs the acquired address conversion table and management information table 20 to the request arbitrator 13. For example, when receiving an instruction to cancel the association between a logical address and data from the system executed by the information processing apparatus 1, the table controller 14 refers to the address conversion table 19 and updates the validity flag associated with the instructed logical address to "0".

The device access controller 15 performs device access on the NAND devices 7a to 10a in accordance with the various requests from the request arbitrator 13. For example, the device access controller 15 receives a read request including a physical address from the request arbitrator 13. In this case, the device access controller 15 reads data stored in the page indicated by the physical address included in the read request out of the pages included in the NAND devices 7a to 10a. The device access controller 15 then outputs the read data to the request arbitrator 13.

For example, the device access controller 15 receives a write request that includes a physical address and data to be written from the request arbitrator 13. In this case, the device access controller 15 stores the data to be written in the physical page indicated by the physical address included in the write request. The device access controller 15 then outputs a reply to the request arbitrator 13 indicating the completion of the data writing.

For example, the device access controller 15 receives, from the request arbitrator 13, an updating request that includes an updating source physical address, an updating destination physical address, and data to be written. In this case, the device access controller 15 reads data of the physical page indicated by the updating source physical address. Subsequently, the device access controller 15 updates the read data to the data included in the updating request. The device access controller 15 then stores the updated data in the physical page indicated by the updating destination physical address. The device access controller 15 then outputs a reply to the request arbitrator 13 indicating the completion of the data writing.

The device access controller 15 receives a transfer request that includes a transfer source physical address and a transfer destination physical address from the request arbitrator 13. In this case, the device access controller 15 reads data from the physical page indicated by the transfer source physical address and stores the read data in the physical page indicated by the transfer destination physical address. The device access controller 15 then outputs a reply to the request arbitrator 13 indicating the completion of the data transfer.

The device access controller 15 receives an erasing request including the physical block address indicating the physical block data of which is erased from the request arbitrator 13. In this case, the device access controller 15 erases the data stored in the physical block indicated by the physical block address included in the erasing request and outputs a reply to the request arbitrator 13 indicating the completion of the data erasure.

The transfer area measurement unit 16 counts the number of reserve blocks and the number of transfer candidate blocks. The transfer area measurement unit 16 then determines whether the cyclic reference control for garbage collection is started in accordance with a result of comparing the number of reserve blocks with the number of transfer candidate blocks. The following describes a functional structure of the transfer area measurement unit 16.

The reserve block counter 16a is a counter that counts the number of reserve blocks. For example, when receiving a signal indicating an increment from the table controller 14, the reserve block counter 16a increments by one the count value while when receiving a signal indicating a decrement from the table controller 14, the reserve block counter 16a decrements by one the count value. The reserve block counter 16a outputs the count value to the determination unit 16c. The reserve block counter 16a is an example of a second counter.

The candidate block counter 16b is a counter that counts the number of transfer candidate blocks. For example, when receiving a signal indicating an increment from the table controller 14, the candidate block counter 16b increments by one the count value while when receiving a signal indicating a decrement from the table controller 14, the candidate block counter 16b decrements by one the count value. The candidate block counter 16b outputs the count value to the determination unit 16c. The candidate block counter 16b is an example of a first counter.

The determination unit 16c compares the value counted by the reserve block counter 16a with the value counted by the candidate block counter 16b, and determines whether the cyclic reference control is started in accordance with the comparison result. When determining that the cyclic reference control is started, the determination unit 16c instructs the cyclic reference controller 17 to perform the cyclic reference control. The determination unit 16c is an example of a determination unit.

For example, when the value counted by the reserve block counter 16a and the value counted by the candidate block counter 16b are equal to each other, the determination unit 16c instructs the cyclic reference controller 17 to perform the cyclic reference control. For example, when the cyclic reference control is performed in advance, the determination unit 16c subtracts the value counted by the candidate block counter 16b from the value counted by the reserve block counter 16a and determines whether the resulting value is equal to or smaller than a certain threshold. When the resulting value is equal to or smaller than the certain threshold as a result of subtracting the value counted by the candidate block counter 16b from the value counted by the reserve block counter 16a, the determination unit 16c instructs the cyclic reference controller 17 to perform the cyclic reference control.

The cyclic reference controller 17 starts the cyclic reference control for wear leveling when a certain time elapses or the cyclic reference controller 17 receives an instruction from software. When receiving the instruction to perform the cyclic reference control from the determination unit 16c, the cyclic reference controller 17 starts the cyclic reference control for garbage collection. The following describes the processing of the cyclic reference control performed by the cyclic reference controller 17. For example, the cyclic reference controller 17 outputs the reference request for the address conversion table 19 and the management information table 20 to the request arbitrator 13. The cyclic reference controller 17 acquires the count value of the timer. The cyclic reference controller 17 receives the address conversion table 19 and the management information table 20 from the request arbitrator 13.

The cyclic reference controller 17 selects one logical address serving as the object of transfer determination processing and performs the following transfer determination processing on the selected logical address. The cyclic reference controller 17 refers to the address conversion table 19 and determines whether the value of the validity flag associated with the selected logical address is "1". When the value of the validity flag is "0", the cyclic reference controller 17 newly selects another logical address serving as a new object of the transfer determination processing, for example, the logical address having the next address number, refers to the address conversion table 19, and determines whether the value of the validity flag associated with the newly selected logical address is "1".

When the value of the validity flag is "1", the cyclic reference controller 17 acquires the physical address associated with the selected logical address from the address conversion table 19. The cyclic reference controller 17 refers to the management information table 20 and checks the page validity and the time stamp that are associated with the physical block address that is the upper bits of the acquired physical address.

When performing the cyclic reference control for wear leveling, the cyclic reference controller 17 determines whether a difference between the checked value of the time stamp and the count value of the timer is larger than a certain threshold. The cyclic reference controller 17 determines whether the value of the time stamp is older than the certain threshold. When determining that the checked value of the time stamp is older than the certain threshold, the cyclic reference controller 17 sets the physical page indicated by the acquired physical address to the object of the transfer processing. When determining that the value of the time stamp is newer than the certain threshold, the cyclic reference controller 17 newly selects one logical address serving as the object of the transfer determination processing.

When performing the cyclic reference control for garbage collection, the cyclic reference controller 17 counts the number of bits having a value of "1" among the bits of the checked page validity. The cyclic reference controller 17 counts the number of pieces of valid data stored in the physical block including the physical page indicated by the acquired physical address. When the count number is equal to or smaller than a certain threshold, the cyclic reference controller 17 sets the physical page indicated by the acquired physical address as the object of the transfer processing. When the count number is larger than the certain threshold, the cyclic reference controller 17 newly selects one logical address serving as the object of the transfer determination processing.

When the physical page indicated by the acquired physical address is set to the object of the transfer processing, the cyclic reference controller 17 performs the following processing. The cyclic reference controller 17 determines whether the number of bits having a value of "1" among the bits of the acquired page validity is "1". When determining that the number of bits having a value of "1" among the bits of the acquired page validity is "1", that is, the physical block becomes empty after the transfer of the data, the cyclic reference controller 17 performs the following processing. The cyclic reference controller 17 outputs, to the data transfer controller 18, a set of the acquired physical address, the selected logical address, and a last flag indicating that the block becomes empty. Thereafter, the cyclic reference controller 17 selects another logical address serving as a new object of the transfer determination processing.

When determining that the number of bits having a value of "1" in the bits of the acquired page validity is not "1", the cyclic reference controller 17 outputs a set of the acquired physical address and the selected logical address to the data transfer controller 18. Thereafter, the cyclic reference controller 17 selects another logical address serving as a new object of the transfer determination processing. When the transfer determination processing is performed on all of the logical addresses, the cyclic reference controller 17 ends the processing.

The data transfer controller 18 transfers data. Specifically, the data transfer controller 18 receives, from the cyclic reference controller 17, the set of the logical address and the physical address or the set of the logical address, the physical address, and the last flag. When receiving the set of the logical address and the physical address, the data transfer controller 18 performs the following processing.

The data transfer controller 18 sets the physical address included in the received set as the transfer source physical address, and outputs a transfer request that includes the transfer source physical address and the logical address included in the received set to the request arbitrator 13. When receiving a reply from the request arbitrator 13 indicating the completion of the data transfer, the data transfer controller 18 ends the data transfer processing of the physical page indicated by the physical address included in the received set.

When receiving the set of the logical address, the physical address, and the last flag from the cyclic reference controller 17, the data transfer controller 18 performs the following processing. The data transfer controller 18 sets the physical address included in the received set as the transfer source physical address, and outputs the transfer request that includes the transfer source physical address and the logical address included in the received set to the request arbitrator 13.

When receiving a reply indicating the completion of the data transfer, the data transfer controller 18 outputs, to the request arbitrator 13, an erasing request including the physical block address that is the upper bits of the physical address included in the received set. When receiving a,reply from the request arbitrator 13 indicating the completion of the data erasure after the output of the erasing request, the data transfer controller 18 ends the data transfer processing of the physical page indicated by the physical address included in the received set. The cyclic reference controller 17 and the data transfer controller 18 are an example of a transfer unit.

For example, the requester interface 12, the request arbitrator 13, the table controller 14, the device access controller 15, the reserve block counter 16a, the candidate block counter 16b, the determination unit 16c, the cyclic reference controller 17, and the data transfer controller 18 are electronic circuits. Examples of the electronic circuit include an integrated circuit such as an application specific integrated circuit (ASIC) and a field programmable gate array (FPGA), a central processing unit (CPU), and a micro processing unit (MPU).

The table storage 11 is a storage device exemplified as a semiconductor memory element such as a random access memory (RAM) and a flash memory.

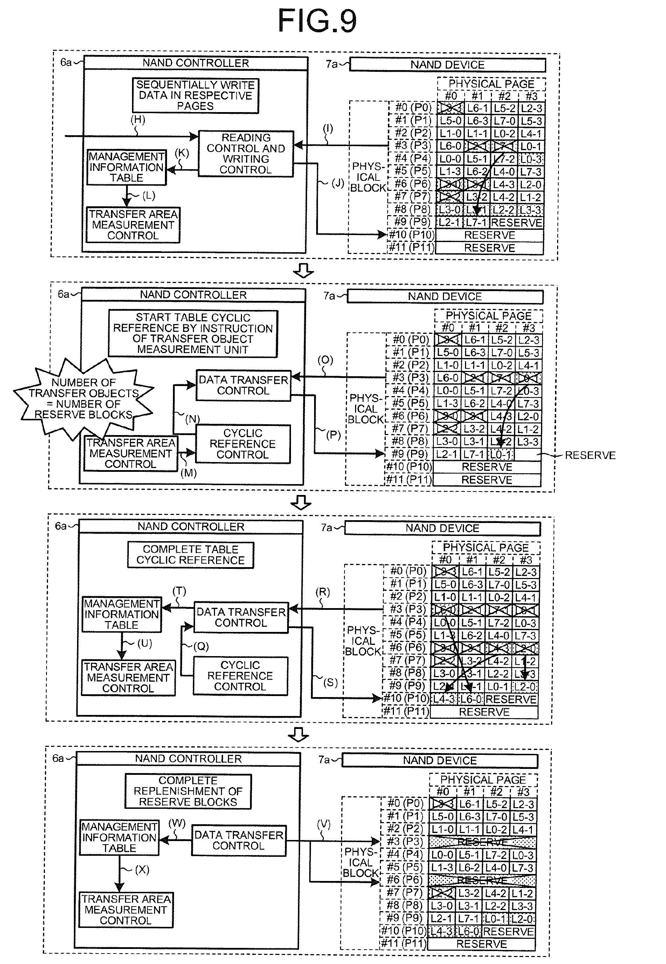

The following describes an example of the processing performed by the NAND controller 6a with reference to FIG. 9. FIG. 9 is a schematic diagram explaining an example of the processing performed by the NAND controller according to the first embodiment. In the physical pages of the NAND device 7a of the example illustrated in FIG. 9, those marked with a cross are the physical pages storing therein data that is not valid. In the example illustrated in FIG. 9, the NAND controller 6a sets, as the object to be transferred, data stored in the physical block including less than three pieces of valid data. In the example illustrated in FIG. 9, the NAND controller 6a starts the cyclic reference control when the number of reserve blocks and the number of transfer candidate blocks are equal to each other.

For example, the NAND controller 6a receives a write request of the data indicated by the logical address "L7-1" as illustrated with (H) in FIG. 9. In this case, the NAND controller 6a reads and updates the data indicated by the logical address "L7-1" as illustrated with (I) in FIG. 9, and stores the updated data in the reserve page indicated by the physical address "P9-1" as illustrated with (J) in FIG. 9. The NAND controller 6a updates the management information table 20 as illustrated with (K) in FIG. 9.

The NAND controller 6a performs the transfer area measurement control in accordance with the updated content of the management information table 20 as illustrated with (L) in FIG. 9. Specifically in the example illustrated in FIG. 9, the NAND controller 6a increments by one the number of transfer candidate blocks because the number of pieces of valid data in the physical block indicated by the physical block address "P3" is smaller than 2.

As a result of the updating of the data indicated by the logical address "L7-1", "two" physical blocks indicated by the physical block addresses "P3" and "P6" become the transfer candidate blocks, and the number of transfer candidate blocks is equal to "2", which is the number of reserve blocks indicated by the physical block addresses "P10" and "P11". The NAND controller 6a thus starts the cyclic reference control for garbage collection as illustrated with (M) in FIG. 9.

For example, the NAND controller 6a selects the logical address "L0-1" and determines whether the data indicated by the selected logical address is transferred. The data indicated by the logical address "L0-1" is stored in the physical block "#3", which is the block from which data thereof is transferred (the data transfer object). The NAND controller 6a thus determines that the data indicated by the logical address "L0-1" is transferred and performs the data transfer control on the data indicated by the logical address "L0-1" as illustrated with (N) in FIG. 9. As a result, the NAND controller 6a reads the data indicated by the logical address "L0-1" as illustrated with (O) in FIG. 9, and transfers the read data to the reserve page indicated by the physical address "P9-2" as illustrated with (P) in FIG. 9.

The NAND controller 6a determines whether data is transferred in the order of the logical addresses and sequentially transfers the data to the reserve page when determining that the data is transferred. The NAND controller 6a selects the logical address "L6-0" and determines whether the data indicated by the selected logical address is transferred. The data indicated by the logical address "L6-0" is stored in the physical block "#3", which is the block from which data thereof is transferred.

The NAND controller 6a thus determines that the data indicated by the logical address "L6-0" is transferred and performs the data transfer control on the data indicated by the logical address "L6-0" as illustrated with (Q) in FIG. 9. As a result, the NAND controller 6a reads the data indicated by the logical address "L6-0" as illustrated with (R) in FIG. 9, and transfers the read data to the reserve page indicated by the physical address "P10-1" as illustrated with (S) in FIG. 9. The NAND controller 6a updates the management information table 20 in accordance with the transfer of the data as illustrated with (T) and (U) in FIG. 9 and performs the transfer area measurement control in accordance with the updating of the management information table 20. When making determination on whether data is transferred for all of the logical addresses, the NAND controller 6a completes the cyclic reference control.

The NAND controller 6a erases the data of the physical blocks from which all of the valid data is transferred, and reserves the physical blocks as new reserve blocks as illustrated with (V) in FIG. 9. The NAND controller 6a then updates the management information table 20 in accordance with the erasing of the data as illustrated with (W) in FIG. 9. The NAND controller 6a performs the transfer area measurement control in accordance with the management information table 20 as illustrated with (X) in FIG. 9. Specifically, the NAND controller 6a adds two to the number of reserve blocks and subtracts two from the number of transfer candidate blocks.

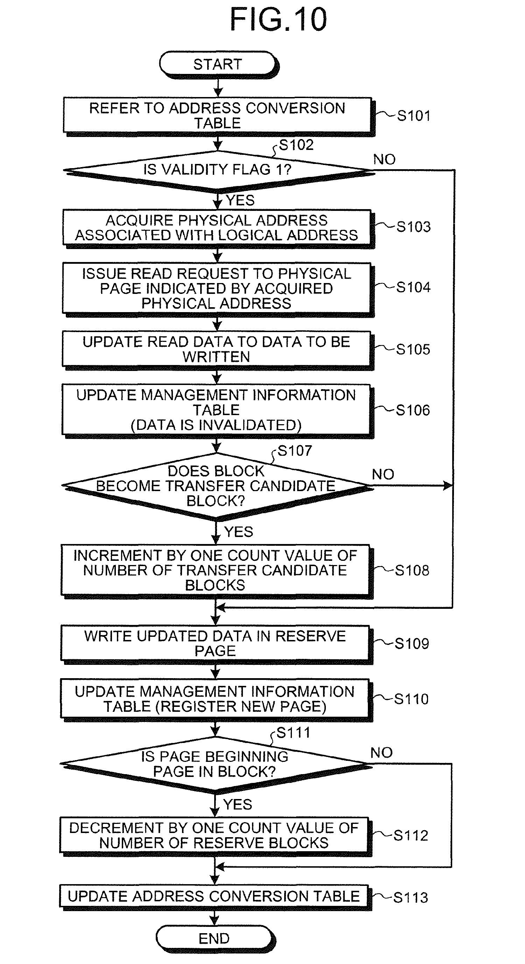

The following describes a flow of the processing performed by the NAND controller 6a with reference to FIG. 10. FIG. 10 is a flowchart explaining a flow of the processing performed by the NAND controller according to the first embodiment. FIG. 10 illustrates a flow of the processing performed by the NAND controller 6a when receiving a write request of data.

Upon receiving of the write request of data, the NAND controller 6a refers to the address conversion table 19 (step S101) and determines whether the validity flag associated with the selected logical address of the data is "1" (step S102). If the validity flag is "1" (Yes at step S102), the NAND controller 6a performs the following processing. The NAND controller 6a acquires the physical address associated with the logical address from the address conversion table 19 (step S103) and issues the read request to the physical page indicated by the acquired physical address (step S104).

The NAND controller 6a updates the read data to the data to be written (step S105) and updates the management information table (step S106). Specifically, the NAND controller 6a updates the page validity corresponding to the physical page storing therein the data before being updated to "0" to invalidate the physical page storing therein the data. The NAND controller 6a determines whether the physical block including the invalidated physical page becomes a transfer candidate block (step S107). If it determines that the physical block including the invalidated physical page becomes a transfer candidate block (Yes at step S107), the NAND controller 6a increments by one the count value of the candidate block counter 16b (step S108).

The NAND controller 6a writes the data updated at step S105 in the reserve page (step S109). The NAND controller 6a then updates the management information table 20 (step S110). Specifically, the NAND controller 6a updates, to "1", the page validity corresponding to the reserve page in which the data is written.

The NAND controller 6a determines whether the reserve page in which the data is written is the beginning page in the reserve block (step S111). If the reserve page in which the data is written is the beginning page in the reserve block (Yes at step S111), the NAND controller 6a decrements by one the count value of the reserve block counter 16a (step S112). Thereafter, the NAND controller 6a updates the address conversion table 19 (step S113), and then ends the processing.

If the validity flag is "0" (No at step S102), the NAND controller 6a performs the processing at step S109. If it determines that the physical block including the invalidated physical page does not become a transfer candidate block (No at step S107), the NAND controller 6a skips step S108 and performs the processing at step S109. If the reserve page in which the data is written is not the beginning page in the reserve block (No at step S111), the NAND controller 6a skips step S112 and performs the processing at step S113.

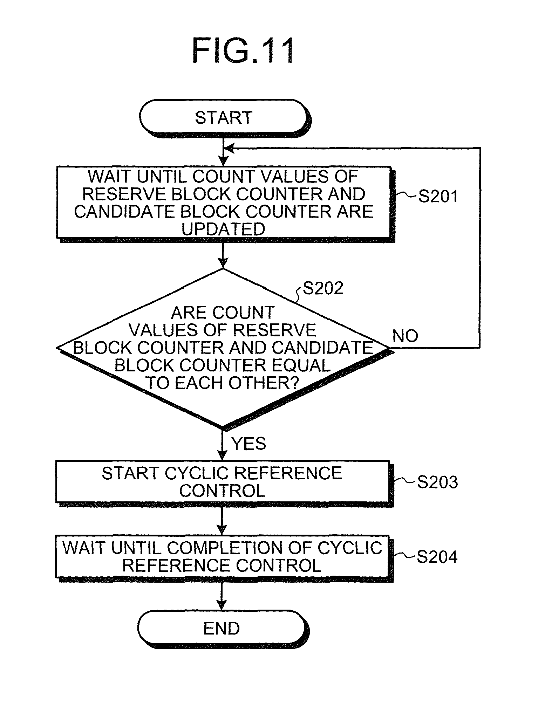

The following describes a flow of the processing performed by the NAND controller 6a to determine whether the cyclic reference control for garbage collection is started with reference to FIG. 11. FIG. 11 is a flowchart explaining a flow of the processing performed by the NAND controller according to the first embodiment to determine whether the cyclic reference control is performed. For example, the NAND controller 6a waits until the count value of the reserve block counter 16a and the count value of the candidate block counter 16b are updated (step S201). The NAND controller 6a determines whether the count value of the reserve block counter 16a and the count value of the candidate block counter 16b are equal to each other (step S202).

If it determines that the count value of the reserve block counter 16a and the count value of the candidate block counter 16b are equal to each other (Yes at step S202), the NAND controller 6a starts the cyclic reference control for garbage collection (step S203). The NAND controller 6a holds the implementation of a write request of data, a read request of data, and other processing until the completion of the cyclic reference control (step S204), and then ends the processing. If it is not determined that the count value of the reserve block counter 16a and the count value of the candidate block counter 16b are equal to each other (No at step S202), the NAND controller 6a performs the processing at step S201.

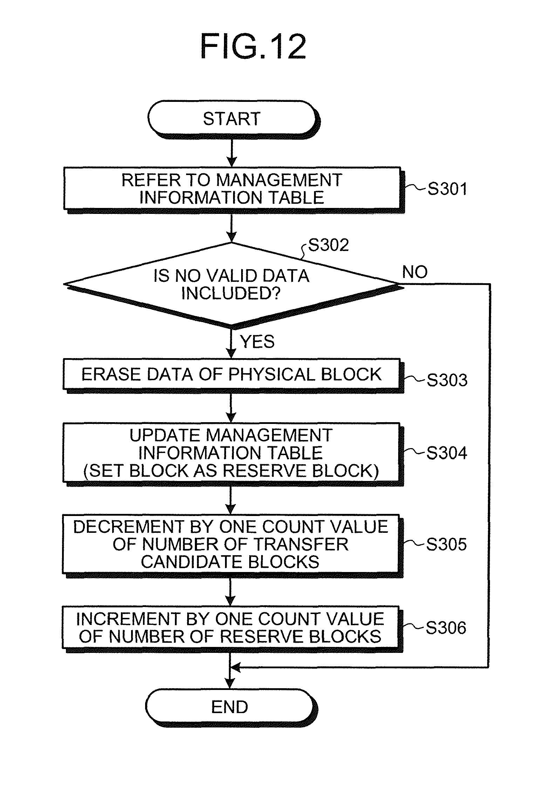

The following describes a flow of the processing performed by the NAND controller 6a to erase data of a physical block with reference to FIG. 12. FIG. 12 is a flowchart explaining a flow of the processing performed by the NAND controller according to the first embodiment to erase data of the physical block. When data is updated or transferred, the NAND controller 6a refers to the management information table 20 (step S301). The NAND controller 6a then determines whether the physical page storing therein valid data is included in the physical block serving as the updating source or the transfer source of the data (step S302).

If it determines that no physical page storing therein valid data is included (Yes at step S302), the NAND controller 6a erases the data of the physical block (step S303) and updates the management information table 20 (step S304). The NAND controller 6a reserves the physical block the data of which is erased as a reserve block. The NAND controller 6a decrements by one the count value of the candidate block counter 16b (step S305), increments by one the count value of the reserve block counter 16a (step S306), and then ends the processing. If it determines that the physical page storing therein valid data is included in the physical block serving as the data transfer source (No at step S302), the NAND controller 6a ends the processing without any change.

### Effects of NAND controller 6a

As described above, the NAND controller 6a counts, among the physical blocks including a plurality of physical pages, the number of transfer candidate blocks including the physical pages in which the written data is invalidated. The NAND controller 6a counts the number of reserve blocks including the physical pages in which no data is written. The NAND controller 6a determines whether the cyclic reference control is started in which data is transferred from a transfer candidate block to a reserve block, in accordance with a result of comparing the number of transfer candidate blocks with the number of reserve blocks. When determining that the cyclic reference control is started, the NAND controller 6a transfers only valid data among data written in the respective physical pages of the transfer candidate block to the reserve block.

The NAND controller 6a thus can improve the access performance to the NAND devices 7a to 10a. The NAND controller 6a can reliably complete the transfer processing such as the garbage collection processing even when NAND controller 6a determines the transfer of data for each logical address and transfer the data on a physical page basis.

The NAND controller 6a determines that the cyclic reference control is started when a value obtained by subtracting the number of transfer candidate blocks from the number of reserve blocks is equal to or smaller than a certain threshold. The NAND controller 6a thus transfers the data in advance, thereby reliably reserving reserve blocks and leveling deterioration. As a result, the storage capacity of the NAND devices 7a to 10a can be efficiently used.

In the case that data before being updated is invalidated, the NAND controller 6a adds one to the count value of the number of transfer candidate blocks when the number of physical pages in which data thereof is invalidated, among the physical pages included in the physical block in which the data before being updated is written, is larger than a certain threshold. As a result, the NAND controller 6a can reliably count the number of transfer candidate blocks set as a result of transfer of data.

The NAND controller 6a subtracts one from the count value of the number of reserve blocks when data is written in the physical page having the beginning physical page number among the physical pages included in a reserve block. As a result, the NAND controller 6a can reliably count the number of reserve blocks.

The NAND controller 6a erases the data written in the physical pages of the transfer candidate block when all of the valid data among the data written in the physical pages of the transfer candidate block is transferred to the physical pages of the reserve block. When erasing the data written in the physical pages of the transfer candidate block, the NAND controller 6a subtracts one from the count value of the number of transfer candidate blocks and adds one to the count value of the number of reserve blocks. As a result, the NAND controller 6a can reflect a change in the number of transfer candidate blocks and the number of reserve blocks due to the garbage collection processing in the count value.

When starting the cyclic reference control, the NAND controller 6a selects a logical address and determines whether the data indicated by the selected logical address is written in a physical page included in the transfer candidate block. When the data indicated by the selected logical address is written in a physical page included in the transfer candidate block, the NAND controller 6a transfers the data indicated by the selected logical address to a physical page included in a reserve block.

The NAND controller 6a transfers data on a physical page basis in this way, thereby making it possible to reduce time spent for the garbage collection processing and the wear leveling processing. The NAND controller 6a thus can improve the access performance to the NAND devices 7a to 10a.

The NAND controller 6a performs the data transfer control using a logical address as the source. The NAND controller 6a thus can update the address conversion table 19 without having a unit that inverse-converts the physical address into the logical address. As a result, the NAND controller 6a can have a reduced circuit scale.

### [b] Second Embodiment

The NAND controller 6a starts the cyclic reference control for garbage collection and reserves a reserve block when the number of transfer candidate blocks and the number of reserve blocks are equal to each other. The embodiment, however, is not limited to this manner. For example, reserve blocks may be used up when a write request from the system executed by the information processing apparatus 1 is implemented during the cyclic reference control. If the implementation of the write request is stopped during the cyclic reference control, the NAND devices 7a to 10a becomes inaccessible temporarily, thereby reducing the access performance. The write request times out during the cyclic reference control and an error occurs in some cases.

A NAND controller 6c according to a second embodiment performs throttling control that limits a frequency of implementation of a write request to the NAND devices 7a to 10a in accordance with the number of transfer candidate blocks and the number of reserve blocks. As a result, the NAND controller 6c can prevent a rapid decrease in performance because a speed of the writing of data gradually decreases with a decrease in the number of reserve blocks relative to the number of transfer candidate blocks.

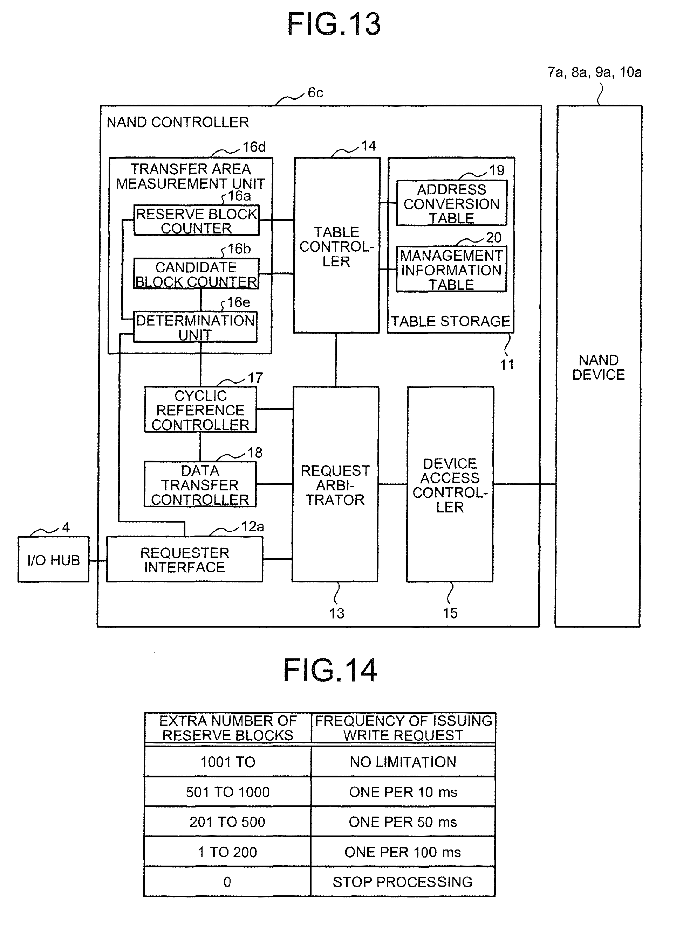

An example of the NAND controller 6c is described below. The following describes an example of a functional structure of the NAND controller 6c with reference to FIG. 13. FIG. 13 is a schematic diagram explaining the functional structure of the NAND controller according to the second embodiment. In the functional structure of the NAND controller 6c illustrated in FIG. 13, the same functional structure as that of the NAND controller 6a illustrated in FIG. 6 is labeled with the same numerals as those of the NAND controller 6a, and the description thereof is omitted.

As illustrated in FIG. 13, the NAND controller 6c includes a requester interface 12a and a transfer area measurement unit 16d. The transfer area measurement unit 16d includes a determination unit 16e. The requester interface 12a functions in the same manner as the requester interface 12 illustrated in FIG. 6. The requester interface 12a issues a write request at a frequency instructed by the determination unit 16e.

For example, the requester interface 12a temporarily stores the write request received through the I/O hub 4 in a buffer. The requester interface 12a reads the write request stored in the buffer at the frequency instructed by the determination unit 16e and issues the write request thus read to the request arbitrator 13. When instructed by the determination unit 16e to stop issuing the write request, the requester interface 12a waits without reading the write request from the buffer.

The determination unit 16e functions in the same manner as the determination unit 16c illustrated in FIG. 6. The determination unit 16e calculates a value by subtracting the count value of the candidate block counter 16b from the count value of the reserve block counter 16a. The determination unit 16e determines whether the calculated value is equal to or smaller than a certain threshold and instructs the cyclic reference controller 17 to perform the cyclic reference control for garbage collection when the calculated value is equal to or smaller than the certain threshold.

The determination unit 16e continues to calculate a value by subtracting the count value of the candidate block counter 16b from the count value of the reserve block counter 16a after instructing the implementation of the cyclic reference control. The determination unit 16e instructs the requester interface 12a to reduce the frequency of issuing a write request in accordance with the calculated value. Specifically, the determination unit 16e instructs the requester interface 12a to further reduce the frequency of issuing a write request with a decrease in the calculated value.

The following describes an example of the processing to reduce the frequency of issuing a write request with reference to FIG. 14. FIG. 14 is a schematic diagram explaining an example of the processing to reduce the frequency of issuing a write request. FIG. 14 illustrates the extra number of reserve blocks, which is the value obtained by subtracting the number of transfer candidate blocks from the number of reserve blocks, and the frequency of issuing a write request in association with each other. In the example illustrated in FIG. 14, the NAND devices 7a to 10a include about 100000 physical blocks.

For example, the determination unit 16e does not limit the frequency of issuing a write request when the extra number of reserve blocks is equal to or larger than "1001" after instructing the implementation of the cyclic reference control. When the extra number of reserve blocks is equal to or larger than "501" and equal to or smaller than "1000" after instructing the implementation of the cyclic reference control, the determination unit 16e instructs the requester interface 12a to issue "1" write request every "10 ms (milliseconds)".

When the extra number of reserve blocks is equal to or larger than "201" and equal to or smaller than "500" after instructing the implementation of the cyclic reference control, the determination unit 16e instructs the requester interface 12a to issue "1" write request every "50 ms". When the extra number of reserve blocks is equal to or larger than "1" and equal to or smaller than "200" after instructing the implementation of the cyclic reference control, the determination unit 16e instructs the requester interface 12a to issue "1" write request every "100 ms". When the extra number of reserve blocks is "0" after instructing the implementation of the cyclic reference control, the determination unit 16e instructs the requester interface 12a to stop issuing a write request.

In this way, the NAND controller 6c reduces the frequency of issuing a write request in accordance with the extra number of reserve blocks. As a result, the NAND controller 6c can prevent the control from causing the writing to the NAND devices 7a to 10a to be suddenly stopped, and thus prevent a rapid decrease in performance. The information processing apparatus 1 thus can perform the data transfer control without reducing the data writing performance of the whole system when executing the system that changes the writing destination of data in accordance with the writing performance to the NAND devices 7a to 10a, for example.

It is preferable for the NAND controller 6c to perform the cyclic reference control at a stage prior to reducing the frequency of issuing a write request in order to prevent the frequency of issuing a write request from being suddenly reduced at the start of the cyclic reference control. For example, in the example illustrated in FIG. 14, the NAND controller 6c can instruct the implementation of the cyclic reference control when the value obtained by subtracting the count value of the candidate block counter 16b from the count value of the reserve block counter 16a is equal to or smaller than "2000". In other words, the NAND controller 6c limits the frequency of issuing a write request in the case that the extra number of reserve blocks still decreases even though the cyclic reference control is started.

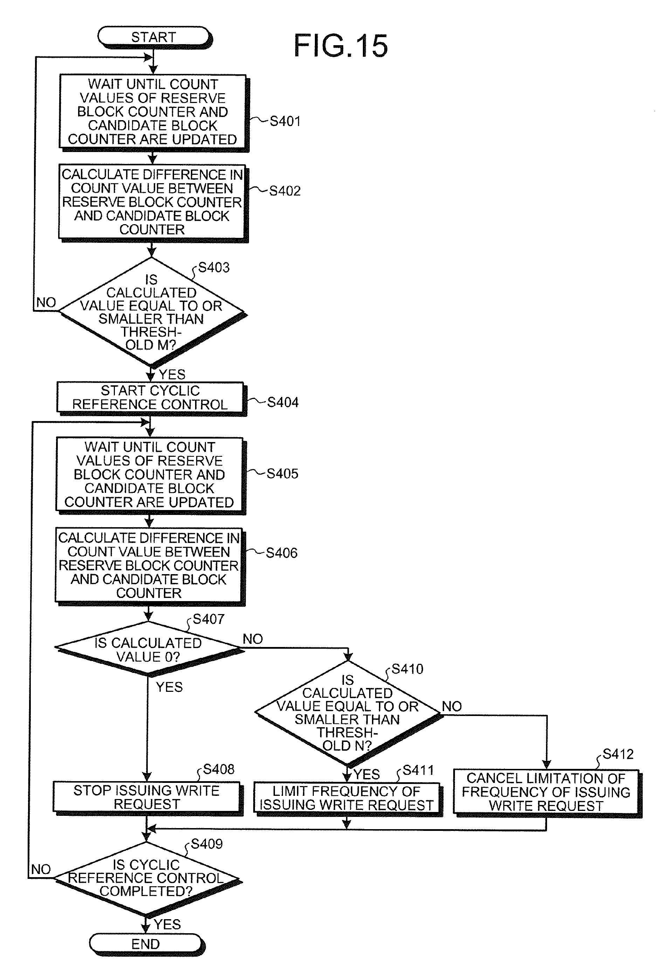

The following describes a flow of the processing performed by the NAND controller 6c with reference to FIG. 15. FIG. 15 is a flowchart explaining a flow of the processing performed by the NAND controller according to the second embodiment. The NAND controller 6c waits until the count value of the reserve block counter 16a and the count value of the candidate block counter 16b are updated (step S401). The NAND controller 6c calculates a value by subtracting the count value of the candidate block counter 16b from the count value of the reserve block counter 16a (step S402).

The NAND controller 6c determines whether the calculated value is equal to or smaller than a certain threshold "M". If the calculated value is equal to or smaller than the certain threshold "M" (Yes at step S403), the NAND controller 6c starts the cyclic reference control for garbage collection (step S404). The NAND controller 6c performs the following processing parallel to the cyclic reference control. The NAND controller 6c waits until the count value of the reserve block counter 16a and the count value of the candidate block counter 16b are updated (step S405). The NAND controller 6c calculates a value by subtracting the count value of the candidate block counter 16b from the count value of the reserve block counter 16a (step S406).

The NAND controller 6c determines whether the calculated value is "0" (step S407). If the calculated value is "0" (Yes at step S407), the NAND controller 6c stops issuing a write request (step S408). The NAND controller 6c determines whether the cyclic reference control is completed (step S409) and ends the processing if the cyclic reference control is completed (Yes at step S409). If the cyclic reference control is not yet completed (No at step S409), the NAND controller 6c performs the processing at step S405.

If the calculated value is not "0" (No at step S407), the NAND controller 6c determines whether the calculated value is equal to or smaller than a certain threshold "N" (step S410). The threshold "N" is equal to or smaller than the threshold "M". If the calculated value is equal to or smaller than the certain threshold "N" (Yes at step S410), the NAND controller 6c limits the frequency of issuing a write request in accordance with the calculated value (step S411), and then performs the processing at step S409.

If the calculated value is larger than the certain threshold "N" (No at step S410), the NAND controller 6c cancels the limitation of the frequency of issuing a write request (step S412), and then performs the processing at step S409. If the calculated value at step S402 is larger than the certain threshold "M" (No at step S403), the NAND controller 6c performs the processing at step S401.

### Effects of NAND controller 6c

As described above, the NAND controller 6c changes the frequency of issuing the write request to the NAND devices 7a to 10a in accordance with the result of comparing the number of reserve blocks with the number of transfer candidate blocks. As a result, the NAND controller 6c can prevent the control from causing the writing to the NAND devices 7a to 10a to be suddenly stopped, and thus prevent a rapid decrease in performance.

When the number of reserve blocks and the number of transfer candidate blocks are equal to each other, the NAND controller 6c stops issuing a write request to the NAND devices 7a to 10a. The NAND controller 6c thus can reliably transfer data.

When a value obtained by subtracting the number of transfer candidate blocks from the number of reserve blocks is equal to or smaller than a certain threshold, the NAND controller 6c reduces the frequency of issuing a write request to the NAND devices 7a to 10a to a value smaller than a certain threshold. The NAND controller 6c thus can gradually reduce the writing performance to the NAND devices 7a to 10a in accordance with the extra number of reserve blocks.

### [c] Third embodiment

The embodiments of the invention are described above. The invention, however, may be implemented in various forms other than the embodiments described above. The following describes other embodiments of the invention as a third embodiment.

### 1. Granularity of data transfer

The NAND controllers 6a to 6c determine whether data is transferred for each logical address included in the NAND devices 7a to 10a. The embodiments, however, are not limited to this manner. The NAND controllers 6a to 6c can determine whether data is transferred on any unit basis as long as they determine whether data is transferred using a logical address as the source. For example, the NAND controllers 6a to 6c may perform the cyclic reference control and the transfer control by collectively using data indicated by a plurality of logical addresses.

### 2. Read of address conversion table and management information table

The cyclic reference controller 17 reads all the entries of the address conversion table 19 and the management information table 20. The embodiments, however, are not limited to this manner. For example, the cyclic reference controller 17 produces one logical address and acquires the physical address associated with the produced logical address through the request arbitrator 13 and the table controller 14. The cyclic reference controller 17 extracts the physical block address from the acquired physical address and acquires the time stamp and the page validity that are associated with the extracted physical block address through the request arbitrator 13 and the table controller 14. The cyclic reference controller 17 then determines whether data is transferred using the acquired time stamp and page validity.

In this way, the cyclic reference controller 17 may refer to the information stored in the address conversion table 19 and the management information table 20 entry by entry. The cyclic reference controller 17 may directly access the address conversion table 19 and the management information table 20 that are stored in the table storage 11 without using the request arbitrator 13 and the table controller 14.

### 3. Functional structure of NAND controllers 6a to 6c

The functional structures of the NAND controllers 6a to 6c are exemplarily described above. Any structures are adoptable that enables the same processing as that of the respective NAND controllers 6a to 6c. For example, the NAND controller 6a may include a transfer controller that has the same functions as those of the cyclic reference controller 17 and the data transfer controller 18. For another example, the NAND controller 6a may include a transfer controller that has the same functions as the transfer area measurement unit 16 and the cyclic reference controller 17.

In the embodiments, the NAND controllers 6a to 6c determine the transfer of data stored in the NAND devices 7a to 10a. The embodiments, however, are not limited to this manner. The NAND controllers 6a to 6c may operate as memory controllers of storage media to which any technique is applied, such as a memory, as long as they transfer data.

### 4. Arbitration of requests

The NAND controllers 6a to 6c perform preferentially a read request and a write request that are received from the requester interface 12. The embodiments, however, are not limited to this manner. The NAND controllers 6a to 6c may arbitrate requests so as to equalize the life of the cells of the NAND devices 7a to 10a.

### 5. Reserve block

The table controller 14 sets a reserve block storing therein no data as the transfer destination of data. The embodiments, however, are not limited to this manner. For example, the table controller 14 identifies a block having the longest life expectancy out of the blocks storing therein no data. The table controller 14 may notify the request arbitrator 13 of the physical block address indicating the identified block. The processing performed in such a manner makes it possible for the NAND controllers 6a to 6c to level the deterioration of the cells of the blocks included in the NAND devices 7a to 10a. As a result, the blocks included in the NAND devices 7a to 10a can be used until the end of life.

### 6. Data to be transferred

The NAND controllers 6a to 6c transfer data when the time stamp of the physical block storing therein the data serving as the object of the transfer determination is older than a certain threshold or the number of pieces of valid data in the physical block is smaller than a certain threshold. The embodiments, however, are not limited to this manner. The NAND controllers 6a to 6c may determine the transfer of data using any information or any conditions. For example, the NAND controllers 6a to 6c may transfer data when the free space of the NAND devices 7a to 10a is small and the number of pieces of valid data in the physical block is smaller than a certain threshold.

### 7. Threshold

The NAND controller 6a adds one to the count value of the number of transfer candidate blocks when data serving as the updating source is invalidated as a result of the updating of the data and the number of pieces of valid data included in the physical block becomes smaller than a certain threshold. In other words, the NAND controller 6a sets the physical block having the number of pieces of valid data that is smaller than the certain threshold as the transfer candidate block. The NAND controller 6a may set the certain threshold to the same value as the number of physical pages included in one physical block.

In other words, the NAND controller 6a sets the physical block in which at least one piece of data thereof is invalidated as a transfer candidate block. As a result, the NAND controller 6a counts the number of physical blocks from which data can be transferred, thereby enabling the cyclic reference control to be started in advance.

It is not needed for the NAND controller 6a that the number of pieces of valid data included in the physical block from which the data is actually transferred is equal to the number of pieces of invalid data included in the transfer candidate block. For example, the NAND controller 6a may set the physical block including at least one piece of valid data as the transfer candidate block and may transfer data from the physical block including more than one piece of invalid data in the cyclic reference control.

The thresholds described above are only exemplified. Any thresholds can be set in accordance with the structure of the information processing apparatus 1. The thresholds described above can be set as the threshold capable of being changed by any unit outside the information processing apparatus 1. The NAND controller 6a may be changeable in accordance with a time zone or the frequency of a write request from a system, for example.

### 8. Differentiation between garbage collection and wear leveling in cyclic reference control

The NAND controllers 6a to 6c differentiate the cyclic reference control for garbage collection and the cyclic reference control for wear leveling and determine whether the physical page is set as the object of the transfer processing on the basis of the respective conditions. The embodiments, however, are not limited to this manner. For example, the NAND controllers 6a to 6c may perform the cyclic reference control for both of garbage collection and wear leveling concurrently when a certain time has elapsed or receiving an instruction from software, and may perform the cyclic reference control for only garbage collection when receiving the instruction to perform the cyclic reference control from the determination unit 16c. When receiving, from the determination unit 16c, an instruction to perform the cyclic reference control during the implementation of the cyclic reference control for both of garbage collection and wear leveling, the NAND controllers 6a to 6c may control such that the cyclic reference control for both of garbage collection and wear leveling is switched to the cyclic reference control for only garbage collection.

### 9. Computer Program

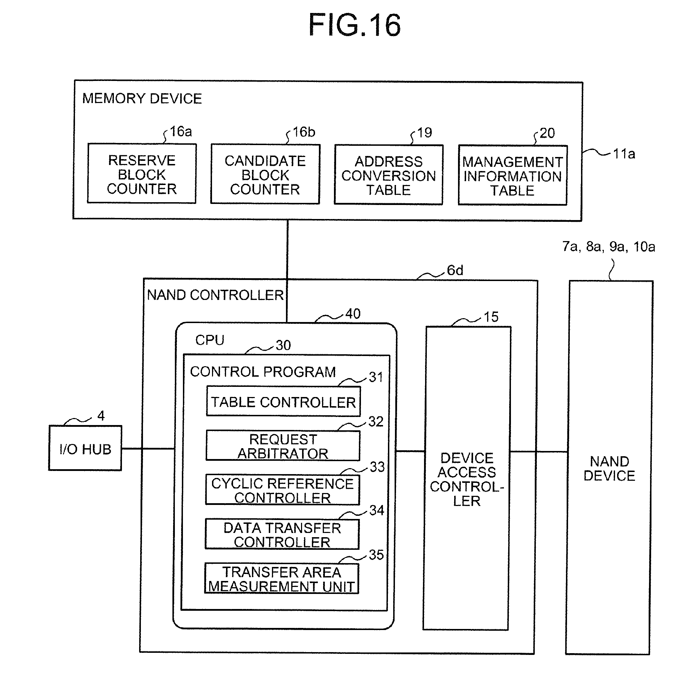

The functions demonstrated by the NAND controllers 6a to 6c described in the above embodiments may be achieved by the arithmetic processing units in the NAND controllers 6a to 6c executing a preinstalled control program. The following describes an example of a computer that executes a control program having the same functions as those of the NAND controller 6a with reference to FIG. 16.

FIG. 16 is a schematic diagram explaining an example of the NAND controller that executes the control program. As illustrated in FIG. 16, a NAND controller 6d includes a CPU 40, and a device access controller 15. The CPU 40 is connected to a memory device 11a. The memory device 11a may be a memory built in the NAND controller 6d.

The memory device 11a preliminarily stores therein the reserve block counter 16a, the candidate block counter 16b, the address conversion table 19, and the management information table 20. The CPU 40 reads, loads, and executes a control program 30. As a result, the control program 30 functions in the following manner. The control program 30 causes the CPU 40 to operate as a table controller 31, a request arbitrator 32, a cyclic reference controller 33, a data transfer controller 34, and a transfer area measurement unit 35. The table controller 31, the request arbitrator 32, the cyclic reference controller 33, and the data transfer controller 34 function in the same manner as the table controller 14, the request arbitrator 13, the cyclic reference controller 17, and the data transfer controller 18, respectively, that are illustrated in FIG. 6. The transfer area measurement unit 35 functions in the same manner as the transfer area measurement unit 16 illustrated in FIG. 6.

The NAND controller 6d may execute the control program 30 using an arithmetic unit such as a micro processing unit (MPU) or a field programmable gate array (FPGA) instead of the CPU. The control program 30 may be stored in the memory device 11a or in the NAND devices 7a to 10a, or may be executed by the CPU 40 in another manner. For example, the programs are stored in a "portable physical medium" such as a flexible disk (what is called an FD), a compact disc (CD)-ROM, a digital versatile disc (DVD), a magnet- optical disc, and an IC card.

The NAND controller 6d may acquire the programs from such portable physical medium through the CPUs 3a and 3b and execute them. The programs stored in another computer or a server may be acquired through a public line, the Internet, a local area network (LAN), or a wide area network (WAN) and may be executed.

At least one of the embodiments can improve the access performance to the NAND device.

## Claims

1. An information processing apparatus, comprising:
a storage device (7a; 8a; 9a; 10a) that includes a plurality of storage areas;
a first counter (16b) that counts, among blocks each including a plurality of storage areas included in the storage device (7a; 8a; 9a; 10a), number of transfer candidate blocks including the storage areas in which written data is invalidated;
a second counter (16a) that counts, among the blocks, number of reserve blocks in which no data is written in the respective storage areas;
a determination unit (16c) that determines whether transfer processing is to be started in which data is transferred from a transfer candidate block to a reserve block, in accordance with a result of comparing a count value of the first counter (16b) with a count value of the second counter (16a); and
a transfer unit (17; 18) that transfers only valid data among data written in the respective storage areas of the transfer candidate block to the reserve block when the determination unit (16c) determines that the transfer processing is to be started.

2. The information processing apparatus according to claim 1, wherein the determination unit (16c) determines that the transfer processing is to be started when a value obtained by subtracting the count value of the first counter (16b) from the count value of the second counter (16a) is equal to or smaller than a predetermined threshold.

3. The information processing apparatus according to claim 1 or 2, wherein the first counter (16b) adds one to a count value when data before being updated is invalidated after the data is updated and number of storage areas in which written data is invalidated in the storage areas included in the block in which the data before being updated is written is larger than a predetermined threshold.

4. The information processing apparatus according to any one of claims 1 to 3, wherein the second counter (16a) subtracts one from a count value when data is written in the storage area serving as a beginning storage area among the storage areas included in the reserve block.

5. The information processing apparatus according to any one of claims 1 to 4, wherein
when transferring all of the valid data among the data written in the respective storage areas of the transfer candidate block to the reserve block, the transfer unit (17; 18) erases the data written in the respective storage areas of the transfer candidate block,
the first counter (16b) subtracts one from the count value when the transfer unit (17; 18) erases the data written in the respective storage areas of the transfer candidate block, and
the second counter (16a) adds one to the count value when the transfer unit (17; 18) erases the data written in the respective storage areas of the transfer candidate block.

6. The information processing apparatus according to any one of claims 1 to 5, further comprising a writing unit (12a; 16e) that changes a frequency of writing data in the storage device (7a; 8a; 9a; 10a), in accordance with a result of comparing the count value of the first counter (16b) with the count value of the second counter (16a).

7. The information processing apparatus according to claim 6, wherein the writing unit (12a; 16e) stops writing data in the storage device (7a; 8a; 9a; 10a) when the count value of the first counter (16b) and the count value of the second counter (16a) are equal to each other.

8. The information processing apparatus according to claim 6 or 7, wherein the writing unit (12a; 16e) reduces the frequency of writing data in the storage device to a value smaller than a predetermined threshold when the value obtained by subtracting the count value of the first counter (16b) from the count value of the second counter (16a) is equal to or smaller than a predetermined threshold.

9. The information processing apparatus according to any one of claims 1 to 8, wherein the transfer unit (17; 18) selects a logical address identifying data, determines whether the data indicated by the selected logical address is stored in the storage area included in the transfer candidate block, and transfers the data to the storage area included in the reserve block when determining that the data is stored in the storage area included in the transfer candidate block.

10. A control circuit, comprising:
a first counter (16b) that counts, among blocks each including a plurality of storage areas included in a storage device (7a; 8a; 9a; 10a), number of transfer candidate blocks including the storage areas in which written data is invalidated;
a second counter (16a) that counts, among the blocks, number of reserve blocks in which no data is written in the respective storage areas;
a determination unit (16c) that determines whether transfer processing is to be started in which data is transferred from a transfer candidate block to a reserve block, in accordance with a result of comparing a count value of the first counter (16b) with a count value of the second counter (16a); and
a transfer unit (17; 18) that transfers only valid data among data written in the respective storage areas of the transfer candidate block to the reserve block when the determination unit (16c) determines that the transfer processing is to be started.

11. A control program that causes a computer to execute a process comprising:
counting, among blocks each including a plurality of storage areas included in a storage device, number of transfer candidate blocks including the storage areas in which written data is invalidated;
counting, among the blocks, number of reserve blocks in which no data is written in the respective storage areas;
determining whether transfer processing is to be started in which data is transferred from a transfer candidate block to a reserve block, in accordance with a result of comparing the number of transfer candidate blocks with the number of reserve blocks; and
transferring only valid data among data written in the respective storage areas of the transfer candidate block to the reserve block when it is determined that the transfer processing is to be started.

12. A control method that is performed by an information processing apparatus, the control method comprising:
counting, among blocks each including a plurality of storage areas included in a storage device, number of transfer candidate blocks including the storage areas in which written data is invalidated;
counting, among the blocks, number of reserve blocks in which no data is written in the respective storage areas;
determining whether transfer processing is to be started in which data is transferred from a transfer candidate block to a reserve block, in accordance with a result of comparing the number of transfer candidate blocks with the number of reserve blocks; and
transferring only valid data among data written in the respective storage areas of the transfer candidate block to the reserve block when it is determined that the transfer processing is to be started.
